# EUROPEAN PATENT APPLICATION

(11) **EP 4 600 799 A2**
(43) Date of publication of application: **13.08.2025**
(21) Application number: 25171885.4
(22) Date of filing: 30.10.2014
(51) Int. Cl.: G06F 3/0484

(54) **INFORMATION PROCESSING APPARATUS, INFORMATION PROCESSING METHOD, AND PROGRAM**

(30) Priority: 07.11.2013 JP 2013231279
(62) Divisional of application: 22199798.4
(71) Applicant: Sony Group Corporation, Tokyo 108-0075 (JP)
(72) Inventor: TAKAHASHI, Masahiro, Tokyo, 108-0075 (JP); AKAGAWA, Satoshi, Tokyo, 108-0075 (JP); TAMURA, Ayaka, Tokyo, 108-0075 (JP); YOSHIOKA, Keiichi, Tokyo, 108-0075 (JP); SAWAI, Kunihito, Tokyo, 108-0075 (JP)
(74) Representative: D Young & Co LLP

(57) **Abstract**

An electronic apparatus and a non-transitory computer readable medium are disclosed. The electronic apparatus comprising, a processor and a memory having program code stored thereon, the program code being such that, when it is executed by the processor, it causes the processor to: control display of a plurality of parameter-setting display layers, each having arranged therein at least one parameter-setting-widget selected from a collection of parameter-setting-widgets that relate to values of imaging parameters, where at least one of the plurality of parameter-setting display layers has more than one of the parameter-setting-widgets arranged therein.

## Description

### [CROSS REFERENCE TO RELATED APPLICATIONS]

This application claims the benefit of Japanese Priority Patent Application JP 2013-231279 filed November 7, 2013, the entire contents of which are incorporated herein by reference.

### [Technical Field]

The present disclosure relates to an information processing apparatus, an information processing method, and a program.

### [Background Art]

PTL 1 discloses an imaging device that, when a user selects any one of a plurality of icons, displays a submenu associated with the selected icon.

### [Citation List]

### [Patent Literature]

[PTL 1]
JP 2009-10775A

### [Summary]

### [Technical Problem]

In this technology, however, when the user attempts to change a shooting parameter, it is necessary for the user to first select an icon corresponding to the shooting parameter that the user attempts to change. For this reason, if the user do not know an icon corresponding to the shooting parameter, it is necessary for the user to select icons one by one and to find out a desired shooting parameter from a submenu. Thus, it takes a lot of effort to set a shooting parameter.

Therefore, it is desirable to provide a technology that allows a user to easily set a shooting parameter.

### [Solution to Problem]

According to a first exemplary illustration of the present disclosure, an electronic apparatus, may include a processor and a memory having program code stored thereon. The program code may be such that, when it is executed by the processor, it causes the processor to perform operations. The processor may control display of a plurality of parameter-setting display layers, each having arranged therein at least one parameter-setting-widget selected from a collection of parameter-setting-widgets that relate to values of imaging parameters, where at least one of the plurality of parameter-setting display layers has more than one of the parameter-setting-widgets arranged therein.

The processor may receive a selection of an imaging mode, and in controlling the display of the plurality of parameter-setting display layers, determine which ones of the collection of parameter-setting-widgets to allocate to which of the plurality of parameter-setting display layers based on the selected imaging mode.

The processor may, in determining which ones of the collection of parameter-setting-widgets to allocate to which of the plurality of parameter-setting display layers, assign a priority to each of the parameter-setting-widgets based on the selected imaging mode, where the parameter-setting-widgets are allocated to the plurality of parameter-setting display layers in accordance with the assigned priorities.

The processor may control display of an imaging-mode-setting widget that enables the user to select the imaging mode.

The processor may, in response to receiving a predetermined user input, superimpose the imaging-mode-setting widget over a currently selected parameter-setting display layer.

The processor may control display of a widget-arrangement interface that enables the user to allocate the collection of parameter-setting-widgets among the plurality of parameter-setting display layers for the selected imaging mode; and receive user input via the widget-allocation interface allocating at least a given one of the parameter-setting-widgets to a given one of the plurality of parameter-setting display layers, wherein the determining of which parameter-setting-widgets to allocate to which of the plurality of parameter-setting display layers is further based on the received user input allocating the given parameter-setting-widget. The controlling of the display of the widget-arrangement interface may include generating a graphical representation of at least one of the plurality of layers in a first display region and a graphical representation of at least one of the parameter-setting-widget images in a second display region, wherein the user allocates the given parameter-setting-widget to the given parameter-setting display layer by dragging the graphical representation of the given parameter-setting-widget in the widget-arrangement interface onto the graphical representation of the given parameter-setting display layer.

The processor may, in response to the user selecting the graphical representation of the given parameter-setting-widget in the widget-arrangement interface, identifying another one of the parameter-setting-widgets that is relevant to the given parameter-setting-widget.

The processor may visually highlight in the widget-arrangement interface the identified parameter-setting-widget that is relevant to the given parameter-setting-widget.

The processor may, in response to a user input that associates the graphical representation of the given parameter-setting-widget in the widget-arrangement interface with the graphical representation of the given parameter-setting display layer, automatically associate the graphical representation of the identified parameter-setting-widget that is relevant to the given parameter-setting-widget with the graphical representation of the given parameter-setting display layer.

The allocation of the plurality of parameter-setting-widgets among the plurality of parameter-setting display layers may depend upon an imaging mode that is selected.

The processor may control display of an image-for-display by superimposing over a captured image the parameter-setting-widgets allocated to a selected layer of the plurality of parameter-setting display layers.

The processor may switch the one of the plurality of layers that is the selected layer based on a user input.

The electronic apparatus may further include an image sensor. The processor may control display of an image-for-display by superimposing, over a through-the-lens-image captured by the image sensor, the parameter-setting-widgets allocated to a selected layer of the plurality of parameter-setting display layers.

The electronic apparatus may further include a display unit that displays an image-for-display generated by the processor.

### [Advantageous Effects of Invention]

According to one or more of embodiments of the present disclosure as described above, the user can easily set a shooting parameter. Note that advantages of the technology according to the present disclosure are not limited to those described herein. The technology according to the present disclosure may have any technical advantage described herein and other technical advantages that are apparent from the present specification.

### [Brief Description of Drawings]

FIG. 1 is a block diagram illustrating the configuration of an information processing apparatus according to a first embodiment of the present disclosure.
FIG. 2 is a hardware configuration diagram of the information processing apparatus according to the first embodiment.
FIG. 3 is a flow chart illustrating the process procedure of the information processing apparatus.
FIG. 4 is a diagram for describing a display example of the information processing apparatus.
FIG. 5 is a diagram for describing a display example of the information processing apparatus.
FIG. 6 is a diagram for describing a display example of the information processing apparatus.
FIG. 7 is a diagram for describing a display example of the information processing apparatus.
FIG. 8 is a diagram for describing a display example of the information processing apparatus.
FIG. 9 is a diagram for describing a display example of the information processing apparatus.
FIG. 10 is a diagram for describing a display example of the information processing apparatus.
FIG. 11 is a diagram for describing a display example of the information processing apparatus.
FIG. 12 is a diagram for describing a display example of the information processing apparatus.
FIG. 13 is a diagram for describing a display example of the information processing apparatus.
FIG. 14 is a diagram for describing a display example of the information processing apparatus.
FIG. 15 is a diagram for describing a display example of the information processing apparatus.
FIG. 16 is a diagram for describing a display example of the information processing apparatus.
FIG. 17 is a diagram for describing a display example of the information processing apparatus.
FIG. 18 is a diagram for describing a display example of the information processing apparatus.
FIG. 19 is a diagram for describing a display example of the information processing apparatus.
FIG. 20 is a diagram for describing a display example of the information processing apparatus.
FIG. 21 is an appearance diagram illustrating the configuration of an information processing system according to a second embodiment of the present disclosure.
FIG. 22 is a block diagram illustrating the configuration of an imaging device according to the second embodiment.
FIG. 23 is a hardware configuration diagram of the imaging device.

### [Description of Embodiments]

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

The description will be made in the following order.
1. First embodiment (example where Information Processing Apparatus performs imaging and displaying)
   1-1. Overview of Process of Information Processing Apparatus
   1-2. Configuration of Information Processing Apparatus
   1-3. Basic Process of Information Processing Apparatus
   1-4. Example of Layer Display
   1-4-1. First Display Example
   1-4-2. Second Display Example
   1-4-3. Third Display Example
   1-4-4. Fourth Display Example
   1-5. Shooting Mode Switching Process
   1-6. Widget Image Determination Process based on Selection of User
   1-7. Widget Image Determination Process based on Scene Selection
   1-8. Display Control based on Use State of Display Unit
   1-9. Other Processes
2. Second Embodiment (example where information processing apparatus performs displaying and imaging device performs imaging)
   2-1. Overall Configuration of Information Processing System
   2-2. Configuration of Imaging Device
   2-3. Process of Information Processing System

### <1. First Embodiment>

### (1-1. Overview of Process of Information Processing Apparatus)

An information processing apparatus 10 according to the first embodiment generally generates a plurality of layers in which a widget image for setting a shooting parameter related to imaging (shooting parameter setting image) are arranged. Specifically, the information processing apparatus 10 determines a widget image to be arranged in each layer based on a shooting mode. The information processing apparatus 10 then arranges a widget image to each layer. On the other hand, the information processing apparatus 10 captures an image and generates a through-the-lens image. The information processing apparatus 10 then sets any one layer as a display layer and superimposes the display layer on the through-the-lens image for displaying on a display unit. One or a plurality of widget images are arranged (displayed) in the display layer.

A widget image according to an embodiment of the present disclosure includes an image for setting a shooting parameter, more specifically, an image capable of performing an input operation for setting a shooting parameter. A shooting parameter is a parameter related to imaging and is not limited to a particular type. A shooting parameter includes, for example, shutter speed (Tv), aperture value (Av), ISO value, shooting mode, focus, dynamic range, panorama, angle-of-view correction, hue correction, exposure compensation, various edit information, and image quality correction (for example, skin smoothing). The shooting mode includes an exposure mode. The widget image may have the position to be displayed and size that can be optionally changed by the user's operation. In addition, the widget image may include an image for indicating the current shooting parameter (for example, widget image 700 or 910, which will be described later).

The information processing apparatus 10 includes an operation unit 15 including, for example, a touch panel 106 and performs processes corresponding to various input operations performed by a user using the operation unit 15. For example, the information processing apparatus 10 adjusts a shooting parameter based on a shooting parameter setting operation (for example, an operation of tapping a predetermined position on a widget image) of the user. Furthermore, the information processing apparatus 10 moves a widget image based on a widget image moving operation (for example, drag operation) of the user. Moreover, the information processing apparatus 10 zooms in and out a widget image based on a widget image zooming operation (for example, pinch-out or pinch-in operation) of the user.

The information processing apparatus 10 also switches a display layer based on a display layer switching operation (for example, horizontal flick operation) of the user. The information processing apparatus 10 also changes a shooting mode based on a shooting mode setting operation (for example, vertical flick operation) of the user. The information processing apparatus 10 then determines a widget image to be arranged in each layer based on a shooting mode.

The information processing apparatus 10 also arranges a widget image selected by a setting image selection operation (for example, an operation of dragging a widget icon into a layer frame image, which will be described later) of the user in each layer.

In this way, the user can select a widget image to be arranged in each layer as desired and can adjust optionally the arrangement position and size of each widget image. In other words, the user can customize each layer as desired. In addition, the user can adjust a shooting parameter by simply performing a shooting parameter setting operation using a widget image displayed on each layer. Thus, according to the first embodiment, the user is able to set a shooting parameter easily.

### (1-2. Configuration of Information Processing Apparatus)

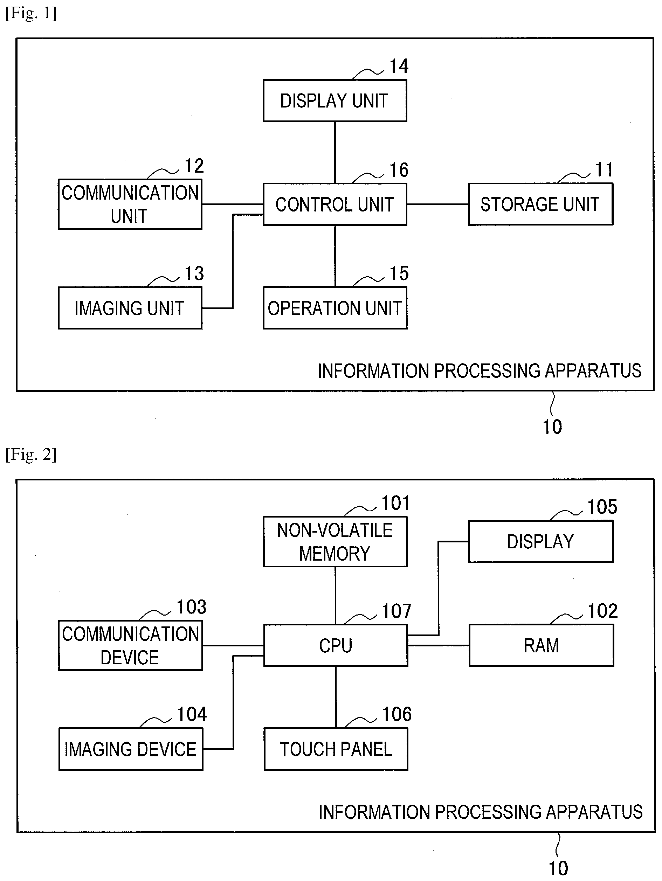

The configuration of the information processing apparatus 10 according to the present embodiment is now described with reference to FIGS. 1 and 2.

As shown in FIG. 1, the information processing apparatus 10 is configured to include a storage unit 11, a communication unit 12, an imaging unit 13, a display unit 14, an operation unit (input operation unit) 15, and a control unit 16. The storage unit 11 stores a program which causes the information processing apparatus 10 to execute functions of the storage unit 11, the communication unit 12, the imaging unit 13, the display unit 14, the operation unit 15, and the control unit 16. The storage unit 11 also stores various types of image information (for example, various widget images).

The communication unit 12 communicates with another information processing apparatus. The imaging unit 13 captures an image. Specifically, the imaging unit 13 outputs an image captured by an image sensor to the control unit 16 as a through-the-lens image until the user performs a shooting operation (for example, an operation of depressing a shutter button which is not shown). The shutter button may be a hard key or may be a button displayed on the display unit 14. When the user performs a shooting operation, the imaging unit 13 captures an image (specifically, performs an action such as releasing a shutter) depending on a setting value of Tv/Av and ISO values. Then, the imaging unit 13 outputs the image captured by the image sensor to the control unit 16 as a captured image.

The display unit 14 displays various images, for example, a widget image and a through-the-lens image as described above. The operation unit 15 may be a touch panel and is disposed on a surface of the display unit 14. The operation unit 15 allows the user to perform various input operations, for example, a shooting parameter setting operation. The operation unit 15 outputs operation information related to an input operation performed by the user to the control unit 16. The control unit 16 controls the entire information processing apparatus 10 and, in particular, receives an input operation and performs various processes. In addition, the control unit 16 performs, for example, a process of arranging a widget image in each layer and performs control of displaying any of layers as a display layer.

The information processing apparatus 10 has the hardware configuration shown in FIG. 2, and such hardware configuration allows the storage unit 11, the communication unit 12, the imaging unit 13, the display unit 14, the operation unit 15, and the control unit 16 to be executed.

In other words, the information processing apparatus 10 is configured to include a non-volatile memory 101, a RAM 102, a communication device 103, an imaging device 104, a display 105, a touch panel 106, and a CPU 107, as its hardware configuration.

The non-volatile memory 101 stores, for example, various programs and image information. The program stored in the non-volatile memory includes a program which causes the information processing apparatus 10 to execute functions of the storage unit 11, the communication unit 12, the imaging unit 13, the display unit 14, the operation unit 15, and the control unit 16.

The RAM 102 is used as a work area of the CPU 107. The communication device 103 communicates with another information processing apparatus. The imaging device 104 captures an image and generates a captured image. The display 105 displays various types of image information. The display 105 may output audio information. The touch panel 106 accepts various input operations of the user. The CPU 107 reads out and executes the program stored in the non-volatile memory 101. Thus, the CPU 107, which reads out and executes the program stored in the non-volatile memory 101, allows the information processing apparatus 10 to execute functions of the storage unit 11, the communication unit 12, the imaging unit 13, the display unit 14, the operation unit 15, and the control unit 16. In other words, the CPU 107 functions as a component for practically operating the information processing apparatus 10.

The information processing apparatus 10 may be a smartphone, smart tablet, or other smart device, but is not particularly limited as long as it satisfies the above requirements. For example, the information processing apparatus 10 may be an imaging device that has the above configuration. However, a smartphone or smart tablet is more preferable because it often has a display screen larger in size than that of the imaging device. In addition, a specific example of the operation unit 15 is a touch panel, but other operation devices may be employed. In other words, the operation unit 15 is not particularly limited as long as it can perform various input operations described above, and may be a hard key such as a cross key and a dial. In addition, the hard key and the touch panel may be used in combination with each other. For example, a sophisticated operation may be performed with a hard key. However, it is preferable to use a touch panel as a specific example of the operation unit 15. In particular, when the information processing apparatus 10 is a smartphone, smart table, or other smart device, it is preferable to use a touch panel as a specific example of the operation unit 15. This is because the user of a smartphone, smart table, or other smart device may be likely to feel it is difficult to operate a hard key. In addition, if an operation is performed in combination with a hard key, it is necessary for the user to capture an image while checking the hard key, and thus the shooting operation may be interrupted. For example, it may be necessary for the user to check separately the operation of a hard key and the display of the display unit 14.

### (1-3. Basic Process of Information Processing Apparatus)

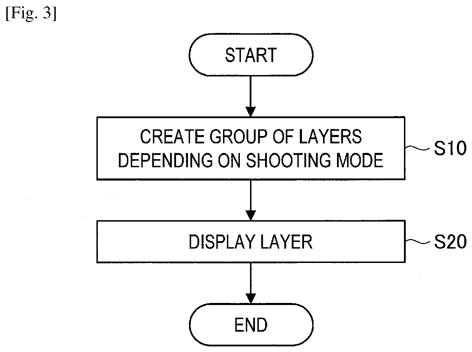

The basic process procedure of the information processing apparatus 10 is now described with reference to the flow chart shown in FIG. 3.

In step S10, the information processing apparatus 10 creates a plurality of layers (a group of layers) based on the current shooting mode. Specifically, the control unit 16 determines (selects) a widget image to be arranged in each layer based on the current shooting mode. In other words, the purpose of the user to capture an image is different for each shooting mode. For example, when a shooting mode is set to a shutter speed priority mode, the user is more likely to capture an image using a high-speed shutter. In addition, when a shooting mode is set to an aperture priority mode, the user is more likely to capture an image in which portions other than a subject are blurred. Thus, the control unit 16 selects a widget image corresponding to (suitable for) the purpose of shooting that is to be performed by the user.

The shooting mode is not particularly limited. The shooting mode includes, for example, various exposure modes, a panorama mode, various scene modes, an edit mode, a preview mode, a playback mode, and a recording (REC) mode. The exposure mode includes, for example, an auto mode, a manual mode, an aperture priority mode, and a shutter speed priority mode. In addition, the scene mode includes, for example, sports, night, macro, landscape, night portrait, and sunset.

When the current shooting mode is set to a program mode, the control unit 16 selects a widget image for setting, for example, exposure (Tv/Av), ISO, scene mode, drive mode (particularly, a self-timer), and picture effect, as a widget image.

When the current shooting mode is set to an aperture priority mode, the control unit 16 selects a widget image for setting creative style, beauty effect, manual focus, focus magnification, and a level, as a widget image.

When the current shooting mode is set to a shutter speed priority mode, the control unit 16 selects a widget image for setting, for example, a drive mode (particularly, a continuous shooting mode), auto focus (AF-C/AF-D), tracking focus, bracket shooting, and ISO, as a widget image.

When the current shooting mode is set to a manual mode, the control unit 16 selects a widget image for setting, for example, ISO, white balance, dynamic range, and image quality, as a widget image.

When the current shooting mode is set to an auto mode, the control unit 16 may select a shooting scene by a process described later and may select a widget image based on the shooting scene. Note that these are only illustrative and other widget images may be selected for every scene.

The control unit 16 then generates a plurality of layers. The number of layers may be one, but preferably two or more. The control unit 16 assigns a layer number (for example, an integer of 1 or more) to each layer and arranges a widget image in each layer. Hereinafter, a layer assigned with a layer number "n" (n is an integer of 1 or more) is also referred to as "n^{th} layer".

The control unit 16 may set a priority for each widget image based on a shooting mode and may arrange a widget image having a high priority in a layer having a low number. For example, when the current shooting mode is set to a program mode, the control unit 16 may arrange a widget image for setting exposure and ISO of the widget images described above in the first layer and may arrange other widget images to the second and subsequent layers. In addition, the arrangement of a widget image in each layer is not particularly limited. The control unit 16 may determine the priority based on other parameters, for example, frequency in use of a widget image by the user. For example, the control unit 16 monitors the frequency in use of a widget image for every shooting mode. When any one shooting mode is selected, the control unit 16 may determine the priority of each widget image based on the frequency in use that corresponds to the selected shooting mode. For example, the control unit 16 may set the priority to be higher as the frequency in use by the user increases.

In step S20, the imaging unit 13 captures an image and outputs a captured image obtained by capturing to the control unit 16. The control unit 16 causes the display unit 14 to display the captured image as a through-the-lens image. The control unit 16 also sets any one layer (first layer for an initial state) of layers as a display layer and superimposes the display layer on the through-the-lens image for displaying. The control unit 16 also displays a display layer indicator that indicates a layer number of the current display layer.

When an input operation for a widget image is performed, the control unit 16 sets a shooting parameter corresponding to the input operation. The control unit 16 may cause only the widget image which is being operated by the user from among widget images in the display layer to be displayed. The control unit 16 may cause the widget image which is being operated by the user to be displayed in an enlarged manner.

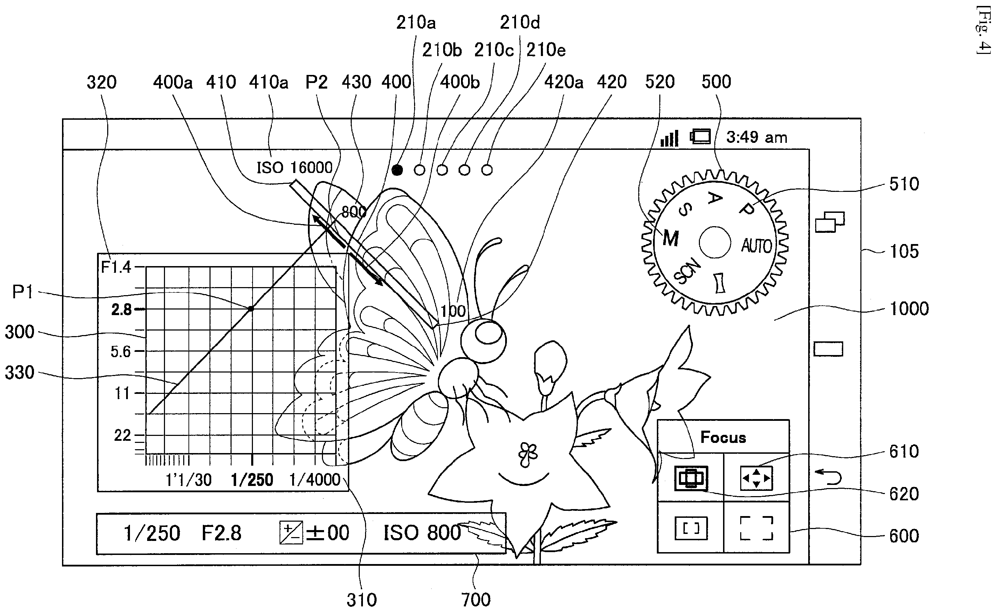

When the user performs a display layer switching operation, the control unit 16 switches the display layer. For example, when the user performs a right flick operation (a finger flick operation in the right direction in FIG. 4), the control unit 16 sets a layer having the layer number higher by one than that of the current display layer as the display layer. When the user performs a left flick operation (a finger flick operation in the left direction in FIG. 4), the control unit 16 sets a layer having the layer number lower by one than that of the current display layer as the display layer.

The control unit 16 may change a way of performing the display layer switching operation depending on the current shooting mode. For example, when the shooting mode is set to a mode of displaying a through-the-lens image, the control unit 16 may set a horizontal flick operation as the display layer switching operation. In addition, when the shooting mode is set to the edit mode of a captured image, the control unit 16 may set a horizontal flick operation as the display layer switching operation. In addition, when the shooting mode is set to the playback mode of a captured image, the control unit 16 may set a vertical flick operation (a finger flick operation in the vertical direction in FIG. 4) as the display layer switching operation. When the horizontal flick operation is performed, the control unit 16 switches the captured image being displayed.

In other words, the control unit 16 may specify the display layer switching operation so that the input operation during the shooting mode and the display layer switching operation are not overlapped. In addition, the control unit 16 may switch the display of a widget image on and off, depending on a shooting mode. For example, when the shooting mode is set to the preview mode, the control unit 16 may delete a widget image. When the shooting mode is set to the recording mode, the control unit 16 may cause only a widget image suitable for the recording mode (for example, a widget image for performing brightness adjustment, backlight correction, or the like) to be displayed, but may delete the widget image. Then, the control unit 16 ends the process.

As described above, the control unit 16 selects a widget image corresponding to the current shooting mode and arranges the selected widget images in each layer. However, the control unit 16 may arrange a preset widget image in each layer regardless of a shooting mode. The control unit 16 changes a display layer based on the display layer switching operation, but control unit 16 may allow a display layer to be switched automatically.

Accordingly, the information processing apparatus 10 allocates a widget image to a plurality of layers, and thus it is possible to obtain a larger area for displaying a widget image. In other words, the information processing apparatus 10 may eliminate the need to narrow intervals between widget images (that is, to achieve space saving) for displaying. Thus, the information processing apparatus 10 can improve the ability to browse through widget images (that is, to make the widget images more visually intelligible).

The user also can set a shooting parameter directly by an operation (for example, a tap operation) on a widget image, and thus an operation necessary for setting a shooting parameter can be simplified (steps can be saved).

The user can arrange a desired widget image in a desired layer. The user can display a desired widget image by switching a display layer and can set a shooting parameter using the displayed widget image. Thus, the user can easily set a shooting parameter. In particular, if the information processing apparatus 10 is a smartphone, smart tablet, or other smart device, the usability of camera functions is improved. As a result, the camera functions are easy for so-called high-end users to understand, and the shooting experience can be expected to be more familiar. Thus, the group of users having a smartphone, smart tablet, or other smart device is expected to expand further.

### (1-4. Example of Layer Display)

### (1-4-1. First Display Example)

Some of examples of layer display are now described. Note that the following description is only an exemplary layer and other widget images may be arranged in each layer. FIG. 4 illustrates an example of displaying a first layer. The control unit 16 displays a through-the-lens image 1000, display layer indicators 210a to 210e, and widget images 300, 400, 500, 600, and 700. In other words, the control unit 16 arranges the widget images 300 to 700 in the first layer.

The display layer indicators 210a to 210e are indicators that represent the layer number of a display layer, and the indicators 210a to 210e correspond to the layer numbers 1 to 5, respectively. The control unit 16 highlights the display layer indicator 210a that corresponds to a display layer. In other words, the control unit 16 displays the display layer indicator 210a in a manner different from other indicators 210b to 210e (for example, with different color or luminance). When the display layer switching operation is performed, the control unit 16 switches a display layer and highlights an indicator corresponding to the current display layer.

The widget image 500 is a dial image that is used to set (select) a shooting mode. Specifically, the widget image 500 has a plurality of shooting mode symbols 510, which indicate a shooting mode, marked in the circumferential direction, and a shooting mode symbol 520 at the left end of these shooting mode symbols 510 is highlighted. The shooting mode symbol 520 indicates a shooting mode being currently set. In other words, the control unit 16 rotates the dial image 500 depending on the user's input operation and highlights the shooting mode symbol 520 shown at the left end of the dial image 500. The control unit 16 then sets the current shooting mode as a shooting mode indicated by the shooting mode symbol 520. The input operation for rotating the dial image 500 may be performed, for example, by tapping the dial image 500 with the finger, and in this state, by moving the finger in the circumferential direction. In the example of FIG. 4, a manual mode (M) is selected. The widget images corresponding to the manual mode are arranged in the first to fifth layers.

The widget image 600 is an image that is used to set (select) a focus mode. A plurality of focus mode symbols 610 are marked in the widget image 600, and a focus mode symbol 620 of these focus mode symbols 610 is highlighted. The focus mode symbol 620 indicates a focus mode that is being currently selected. For example, when the user taps any one of the focus mode symbols 610, the control unit 16 highlights the focus mode symbol 610 tapped by the user and shifts to a focus mode corresponding to the focus mode symbol 610. The widget image 700 indicates a shooting parameter (for example, Tv/AV or ISO value) that is being currently set.

The widget image 300 is a widget image in which the horizontal axis 310 represents Tv and the vertical axis 320 represents Av. When the user taps any one point on the widget image 300, the control unit 16 displays a point P1 on the tapped point. The control unit 16 also sets a Tv/AV value as the Tv/AV value indicated by the point P1, and highlights the Tv/AV value indicated by the point P1 on the horizontal axis 310 and the vertical axis 320. In the example of FIG. 4, the Tv value is set to 1/250 and the Av value is set to 2.8. The current shooting mode is set to the manual mode, and thus the control unit 16 provides no limitation on the Tv/Av value. Thus, the user can select (set) the Tv/Av value by tapping any one point on the widget image 300.

Furthermore, the control unit 16 displays a reference line 330 passing through the point P1 on the widget image 300. The Tv/Av value indicated by each point on the reference line 330 indicates the same amount of exposure as that of the point P1. The reference line 330 is extended to the outside through the right upper end of the widget image 300.

If the user taps a point other than the point P1 during display of the point P1, then the control unit 16 moves the point P1 to the point tapped by the user. Then, the control unit 16 sets the Tv/Av value to a Tv/Av value indicated by the point P1 after movement. Furthermore, the control unit 16 causes the reference line 330 to follow the point P1 newly set.

Note that a way for the user to select (set) the Tv/Av value is not limited to the way of tapping a point on a widget image, and is not particularly limited as long as a point on the widget image 300 can be selected. For example, the user may select a point on the widget image 300 using a drag-and-drop operation. For example, when the user drags the point P1, the control unit 16 causes the point P1 to follow the finger of the user, and when the user drops the point P1, the control unit 16 displays the point P1 at the position. The control unit 16 may accept the operation of combination between the tap operation and the drag-and-drop operation. Then, the control unit 16 may set the Tv/Av value to a Tv/Av value indicated by the moved point P1.

The widget image 400 is a bar image used to select an ISO value. In the widget image 400, each point in the longitudinal direction indicates an ISO value, a point 410 at the upper end indicates the maximum value of the ISO values, and a point 420 at the lower end indicates the minimum value of the ISO values. In the example of FIG. 4, the maximum value is set to 16000 and the minimum value is set to 100, but the maximum and minimum values are not limited to these examples. The control unit 16 displays a maximum value display image 410a near the point 410 at the upper end of the widget image 400 and displays a minimum value display image 420a near the point 420 at the lower end of the widget image 400.

The control unit 16 displays the widget image 400 in association with the widget image 300. Specifically, the control unit 16 displays the widget image 400 in a position intersecting with the reference line 330. More specifically, the control unit 16 sets the ISO value indicated by a point P2 at which the widget image 400 and the reference line 330 intersect as a setting value of the ISO value. In other words, the control unit 16 causes the point P2 in the widget image 400 corresponding to the setting value of the ISO value to be intersected with the reference line 330. In addition, the control unit 16 displays a setting value display image 430 indicating the setting value of the ISO value in the vicinity of the point P2.

Moreover, the control unit 16 moves the widget image 400 in the direction of an arrow 400a or 400b depending on the user's input operation. The input operation includes, for example, a way of tapping the widget image 400 with the finger and dragging the finger to the direction of the arrow 400a or 400b. This also changes the setting value indicated by the point P2, and thus the control unit 16 sets (changes) the ISO value as a setting value indicated by the point P2.

The control unit 16 causes the widget image 400 to follow the reference line 330 when the reference line 330 is moved. In this time, the control unit 16 may maintain the ISO value to be the current value, and may change the ISO value to the optimal value (or a preset initial value) that corresponds to the changed Tv/Av value. The "optimal value" in an embodiment of the present disclosure refers to a value that is determined as being optimal by the control unit 16. In the former case, the control unit 16 adjusts the position of the widget image 400 to maintain the ISO value. In other words, the position of the point P2 in the widget image 400 before and after movement of the reference line 330 remains unchanged. In the latter case, the control unit 16 calculates an optimal value of the ISO value corresponding to the Tv/Av value and sets the ISO value as the optimal value (or sets the ISO value as the preset initial value). Moreover, the control unit 16 adjusts the position of the widget image 400 so that the point P2 indicates an optimal value (or initial value).

The control unit 16 calculates an optimal value of the Tv/Av value and ISO value and adjusts the positions of the point P1, the reference line 330, and the widget image 400 based on the calculated optimal value, in the initial state, that is, in the state where the images shown in FIG. 4 begin to be displayed.

A setting image used to set the ISO value (a second setting image) is not limited to the bar image. For example, the second setting image may be a dial-shaped image. Such a dial image has an ISO value marked in the circumferential direction thereof as in the dial image 500. The control unit 16 causes any one of ISO values on the dial image to be intersected with the reference line 330. The control unit 16 sets the ISO value intersected with the reference line 330 as a setting value.

The control unit 16 also may cause the through-the-lens image 1000 to be changed depending on the current shooting parameter (for example, Tv/Av value and ISO value). For example, the control unit 16 may perform a process such as blurring and panning on the through-the-lens image 1000 depending on the current Tv/Av value and ISO value. In this case, the user can easily grasp how the through-the-lens image 1000 changes depending on the current shooting parameter.

The control unit 16 also may reset the setting value of the Tv/Av value and ISO value for every shooting operation, or may remain the setting value unchanged.

When the shooting mode is set to the auto mode (the mode in which Tv/Av value and ISO value are set automatically), the control unit 16 also may perform the following processes. In other words, each time when the user performs a preliminary operation of the shooting operation (for example, operation of depressing a shooting button halfway), the control unit 16 may calculate an optimal value of the Tv/Av value and ISO value and may adjust dynamically the positions of the point P1, the reference line 330, and the widget image 400 based on the calculated optimal value. This makes it possible for the user to grasp easily, for example, how the Tv/Av value and ISO value are changed for every shooting scene. Thus, for example, novice users or advanced amateur users can know the mechanism of an imaging device using a graphical representation. Accordingly, novice users and advanced amateur users are interested in the Tv/Av value and ISO value, and eventually, it is expected that they become more motivated to change these shooting parameters by their own desire.

According to the first display example, the display unit 14 displays the widget images 300 and 400 in association with each other, and thus the user can grasp intuitively the relevance between these shooting parameters. Accordingly, the user can set intuitively these shooting parameters. The user may set the Tv/Av value before ISO value, or may set the ISO value before Tv/Av value.

Furthermore, the user can set the Tv/Av value and ISO value using only two steps, the step of tapping (or drags and drops) the widget image 300 and the step of moving the widget image 400. Thus, the user can set easily these shooting parameters. Moreover, the control unit 16 changes the widget images 300 and 400 depending on the user's operation (for example, to move the point P1 and the reference line 330, and to move the widget image 400). Thus, the user can set these shooting parameters in a graphical and dynamical (flexible) manner.

A veteran user can view each of shooting parameters with his eyes and comprehend it before shooting. A novice user can easily grasp how each shooting parameter changes depending on his input operation. Accordingly, it is expected that a novice user becomes much more interested in setting of each shooting parameter.

Furthermore, the information processing apparatus 10 can provide an interface that allows the user of the existing imaging device to perform an input operation more efficiently. On the other hand, the information processing apparatus 10 allows the user who feels any difficulty in using an imaging device like users of a smartphone, smart tablet, or other smart device to be more accessible. In addition, the applicability of display modes in the information processing apparatus 10 to the imaging device makes it possible to diversify the product form of the imaging device and meet the needs of an increasing number of users.

The inventors have also contemplated a technology that sets each shooting parameter with only a hard key (for example, any combination of dial, button, cross key, or the like). However, in this technology, setting of one shooting parameter may often necessitate a multi-step process. In addition, it is also difficult for the user to know the relevance between shooting parameters. The usability depends on the number and installation position of hard keys. If the number of hard keys is small, combinations of these hard keys are increased, resulting in the more complicated operations. In addition, in the technology disclosed in PTL 1, there are many cases where the shooting parameter is incapable of being set with only one submenu. In this case, the user will set the shooting parameter by following a plurality of submenus (submenu having a deep hierarchy), so the operation will be complicated.

### (1-4-2. Second Display Example)

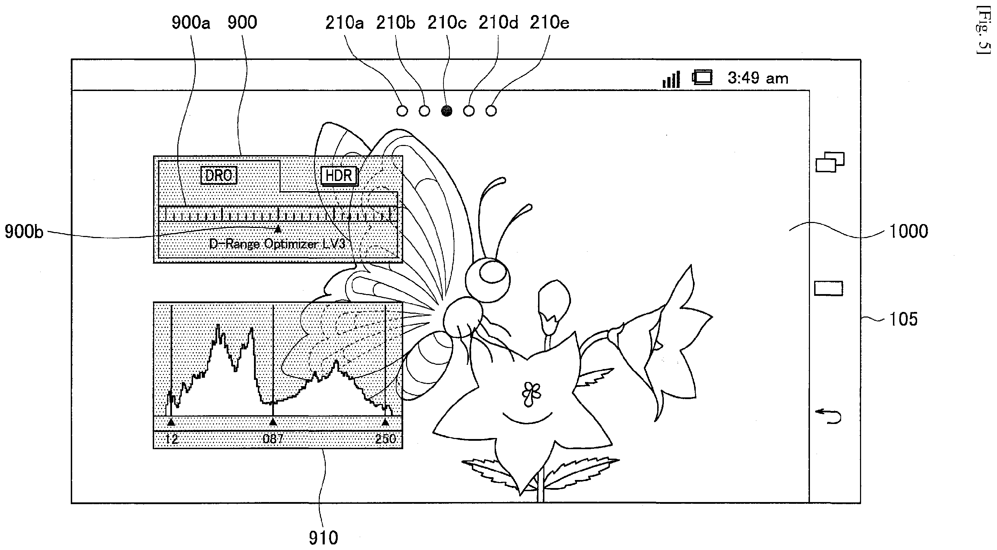

The second display example is now described with reference to FIG. 5. In the second display example, the control unit 16 arranges widget images 900 and 910 in the third layer and sets the third layer as a display layer. In addition, the control unit 16 highlights the display layer indicator 210c.

The widget image 900 is an image used to set (adjust) dynamic range and includes a gauge image 900a and an arrow image 900b. The gauge image 900a is a strip-shaped image in which a scale is formed in the longitudinal direction. Each scale indicates the value of dynamic range. The arrow image 900b indicates any scale in the gauge image 900a. The control unit 16 moves the arrow image 900b in the left and right direction depending on the user's input operation. In this case, the input operation includes, for example, an operation of dragging and dropping the arrow image 900b and an operation of tapping a desired point on the gauge image 900a. Then, the control unit 16 changes a setting value of dynamic range to the dynamic range indicated by the arrow image 900b. The widget image 910 is a histogram in which the horizontal axis represents luminance of pixel and the vertical axis represents frequency (the number of pixels).

### (1-4-3. Third Display Example)

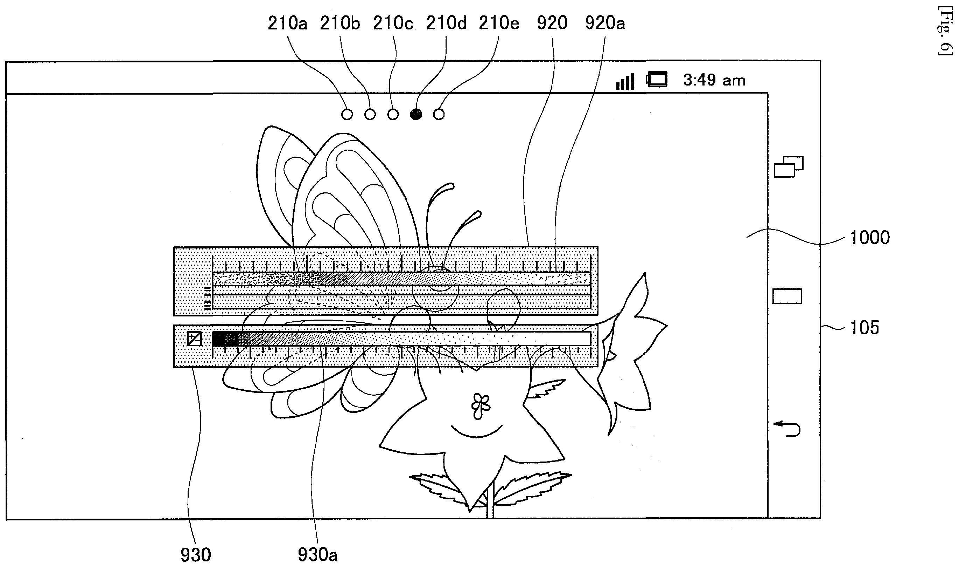

The third display example is now described with reference to FIG. 6. In the third display example, the control unit 16 arranges widget images 920 and 930 in the fourth layer, and sets the fourth layer as a display layer. In addition, the control unit 16 highlights the display layer indicator 210d.

The widget image 920 is an image used to set (adjust) the hue of a captured image and includes a gauge image 920a. The gauge image 920a is a strip-shaped image in which a scale is formed in the longitudinal direction. Each scale indicates a value of hue. In the gauge image 920a, hue is displayed as gradation of color.

The control unit 16 sets a hue depending on the user's input operation. In this case, the input operation includes, for example, an operation of tapping a desired point on the gauge image 920a. The control unit 16 may display an arrow image indicating any one scale in the gauge image 920a near the gauge image 920a and may move the arrow image depending on the user's input operation. Then, the control unit 16 may set the hue indicated by the arrow image as the current hue.

The widget image 930 is an image used to set (adjust) the amount of exposure compensation (the amount of brightness correction) of a captured image, and includes a gauge image 930a. The gauge image 930a is a strip-shaped image in which a scale is formed in the longitudinal direction. Each scale indicates a value of the amount of exposure compensation. In addition, in the gauge image 930a, the amount of exposure compensation is displayed as a gradation representation. In other words, as the scale has a larger amount of exposure compensation, it is displayed as higher luminance.

The control unit 16 sets the amount of exposure compensation depending on the user's input operation. In this case, the input operation includes, for example, an operation of tapping a desired point on the gauge image 930a. The control unit 16 may display an arrow image indicating any one scale in the gauge image 930a near the gauge image 930a and may move the arrow image depending on the user's input operation. Then, the control unit 16 may set the amount of exposure compensation indicated by the arrow image as the current amount of exposure compensation.

### (1-4-4. Fourth Display Example)

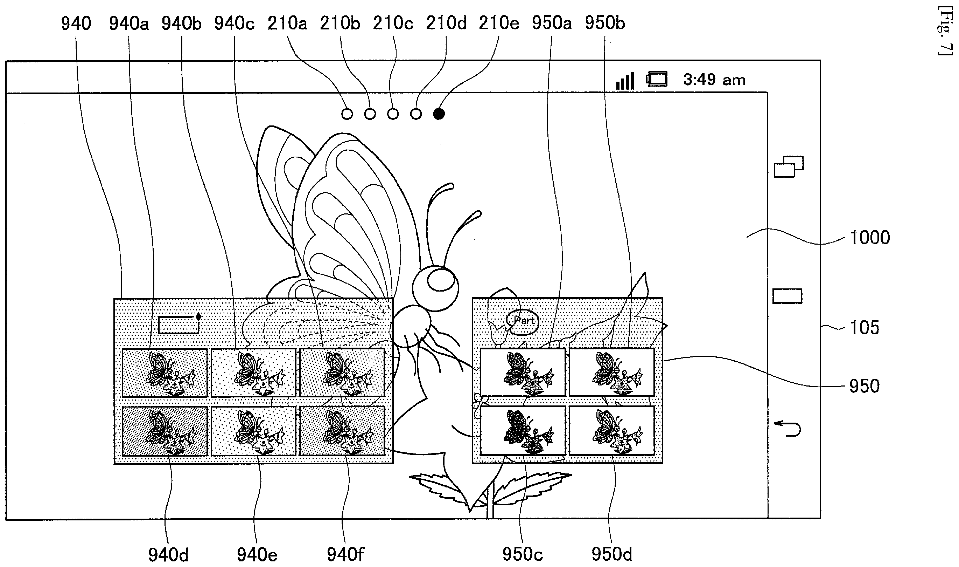

The fourth display example is now described with reference to FIG. 7. In the fourth display example, the control unit 16 arranges widget images 940 and 950 in the fifth layer, and sets the fifth layer as a display layer. In addition, the control unit 16 highlights the display layer indicator 210e.

The widget image 940 is an image used to set (select) an image style (representation style) of a captured image. The image style indicates any combination of saturation, brightness, and contrast. The widget image 940 includes a plurality of image style icons 940a to 940f. In each of the image style icons 940a to 940f, a sample image in which an image style is applied to a through-the-lens image is drawn. The control unit 16 sets an image style depending on the user's input operation. In this case, the input operation includes, for example, an operation of tapping any one of the image style icons 940a to 940f. The widget image 950 is an image used to set (select) the color of a portion of a captured image. The widget image 950 includes a plurality of color setting icons 950a to 950d. In each of the color setting icons 950a to 950d, a sample image in which a portion of the through-the-lens image is colored is drawn. The control unit 16 sets the color depending on the user's input operation. In this case, the input operation includes, for example, an operation of tapping any one of the color setting icons 950a to 950d.

### (1-5. Shooting Mode Switching Process)

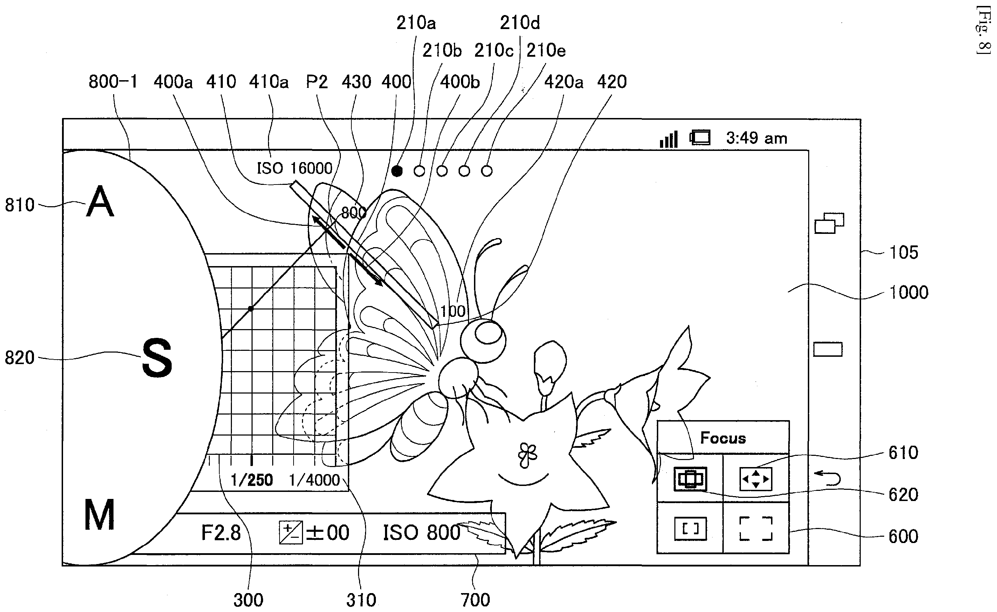

The shooting mode switching process is now described with reference to FIG. 8. That is, when the user performs a shooting mode setting operation (for example, a vertical flick operation), the control unit 16 displays a shooting mode setting image 800-1 as shown in FIG. 8.

The shooting mode setting image 800-1 is a dial image with a semi-circular shape that is used to set (select) a shooting mode and has a similar function as that of the widget image 500. In other words, in the shooting mode setting image 800-1, a plurality of shooting mode symbols 810 that indicate a shooting mode are marked in the circumferential direction, and a shooting mode symbol 820 at the right end of these shooting mode symbols 810 is highlighted. The shooting mode symbol 820 indicates a shooting mode that is currently set.

Then, the control unit 16 rotates the shooting mode setting image 800-1 depending on the shooting mode setting operation. For example, when the shooting mode setting operation is an upward flick operation, the control unit 16 rotates the shooting mode setting image 800-1 in the counterclockwise direction. On the other hand, when the shooting mode setting operation is a downward flick operation, the control unit 16 rotates the shooting mode setting image 800-1 in the clockwise direction.

Then, the control unit 16 highlights a shooting mode symbol 820 marked at the right end of the shooting mode setting image 800-1. Then, the control unit 16 sets the current shooting mode as a shooting mode indicated by the shooting mode symbol 820. In the example of FIG. 8, the shutter speed priority mode (S) is selected. Thereafter, the control unit 16 deletes the shooting mode setting image 800-1. Then, the control unit 16 selects a widget image corresponding to the shutter speed priority mode (S) that is the current shooting mode, and arranges the selected widget image in each layer. A specific way of arrangement is the same as described above.

Although the dial image 500 is omitted in the example of FIG. 8, the control unit 16 may display the dial image 500 together with the shooting mode setting image 800-1. In this case, the control unit 16 may rotate the dial image 500 in synchronization with the shooting mode setting image 800-1. The shooting mode symbol 520 of the dial image 500 and the shooting mode symbol 820 of the shooting mode setting image 800-1 indicate the same shooting mode.

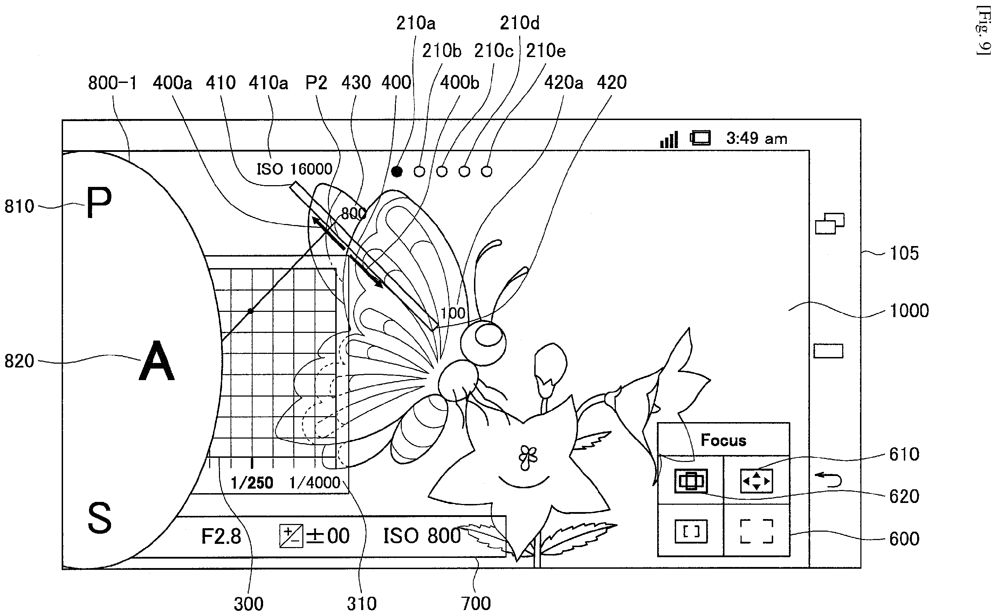

When the current shooting mode is set to the shutter speed priority mode and the user performs a downward flick operation, the control unit 16 rotates the shooting mode setting image 800-1 in the clockwise direction as shown in FIG. 9. Then, the control unit 16 highlights the shooting mode symbol 820 that indicates an aperture priority mode (A). Then, the control unit 16 set the current shooting mode as the aperture priority mode. Thereafter, the control unit 16 deletes the shooting mode setting image 800-1. The control unit 16 then selects a widget image corresponding to the aperture priority mode that is the current shooting mode, and arranges the selected widget image in each layer.

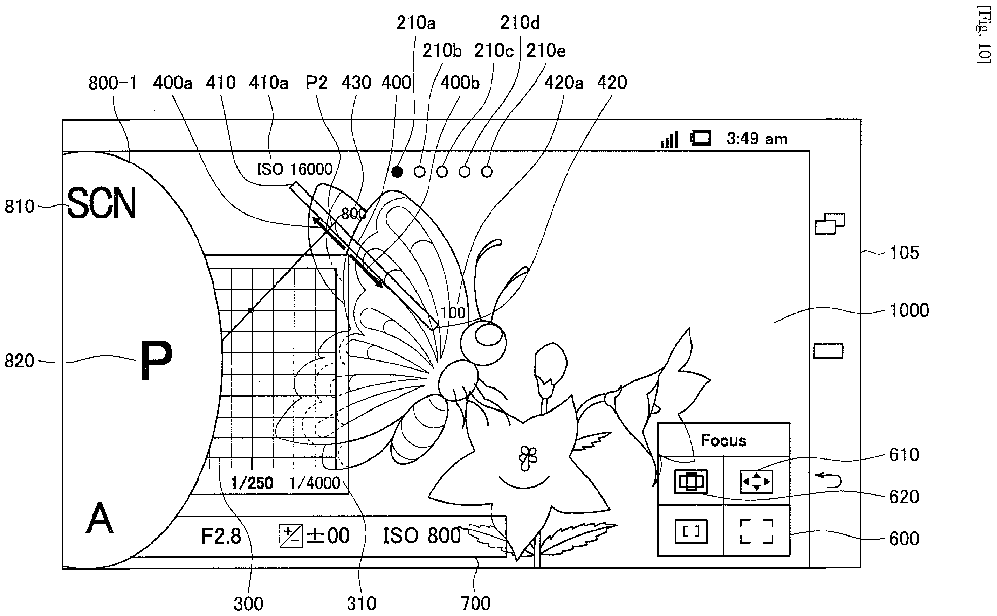

When the current shooting mode is set to the aperture priority mode and the user performs a downward flick operation, the control unit 16 rotates the shooting mode setting image 800-1 in the clockwise direction as shown in FIG. 10. Then, the control unit 16 highlights the shooting mode symbol 820 that indicates a program mode (P). Then, the control unit 16 set the current shooting mode as the program mode. Thereafter, the control unit 16 deletes the shooting mode setting image 800-1. The control unit 16 then selects a widget image corresponding to the program mode that is the current shooting mode, and arranges the selected widget image in each layer.

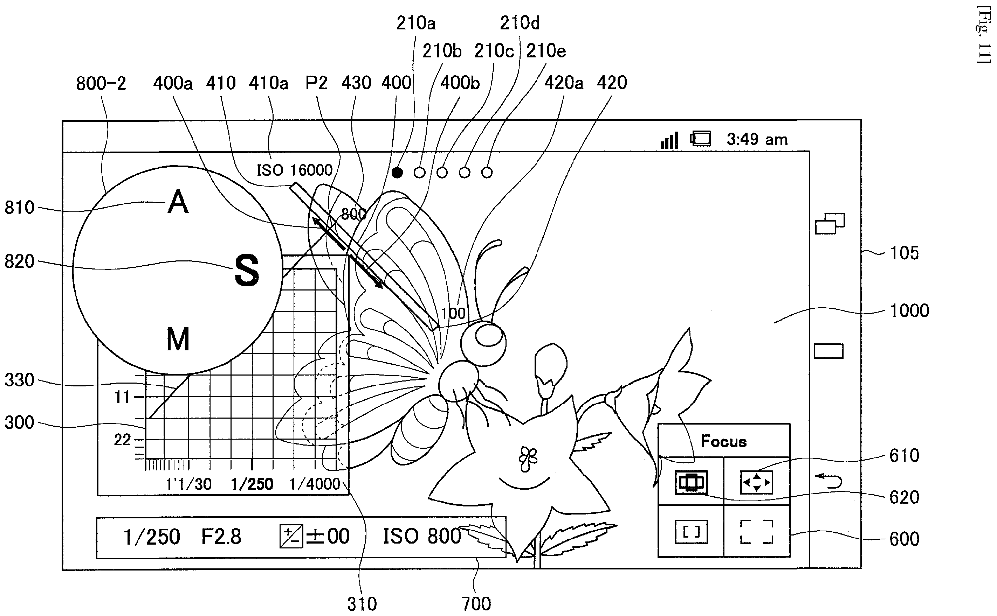

The shooting mode setting image is not limited to the above example. An example of another shooting mode setting mode is now described. FIG. 11 illustrates a shooting mode setting image 800-2 as another example of the shooting mode setting image. The shooting mode setting image 800-2 is a circular dial image that is similar to the widget image 500. In the shooting mode setting image 800-2, a plurality of shooting mode symbols 810 that indicate a shooting mode are marked in the circumferential direction, and a shooting mode symbol 820 at the right end of these shooting mode symbols 810 is highlighted. The shooting mode symbol 820 indicates a shooting mode that is currently set.

The control unit 16 rotates the shooting mode setting image 800-2 depending on the shooting mode setting operation. For example, when the shooting mode setting operation is an upward flick operation, the control unit 16 rotates the shooting mode setting image 800-2 in the counterclockwise direction. On the other hand, when the shooting mode setting operation is a downward flick operation, the control unit 16 rotates the shooting mode setting image 800-2 in the clockwise direction. The control unit 16 then highlights a shooting mode symbol 820 marked at the right end of the shooting mode setting image 800-2. Then, the control unit 16 sets the current shooting mode to a shooting mode indicated by the shooting mode symbol 820.

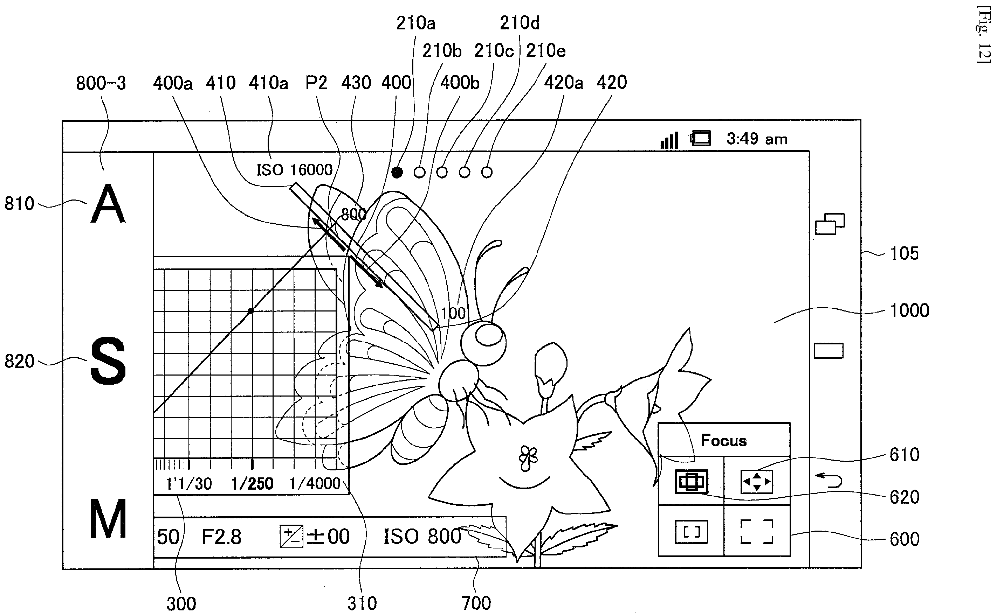

FIG. 12 illustrates a shooting mode setting image 800-3 as another example of the shooting mode setting image. The shooting mode setting image 800-3 is an image with a vertical belt shape. In the shooting mode setting image 800-3, a plurality of shooting mode symbols 810 that indicate a shooting mode are marked in the vertical direction, and a shooting mode symbol 820 in the middle of these shooting mode symbols 810 is highlighted. The shooting mode symbol 820 indicates a shooting mode that is currently set.

The control unit 16 moves the shooting mode setting image 800-3 in the vertical direction depending on a shooting mode setting operation. For example, when the shooting mode setting operation is an upward flick operation, the control unit 16 moves the shooting mode setting image 800-3 in the upward direction. On the other hand, when the shooting mode setting operation is a downward flick operation, the control unit 16 moves the shooting mode setting image 800-3 in the downward direction. Then, the control unit 16 highlights a shooting mode symbol 820 marked in the middle of the shooting mode setting image 800-3. Then, the control unit 16 sets the current shooting mode to a shooting mode indicated by the shooting mode symbol 820.

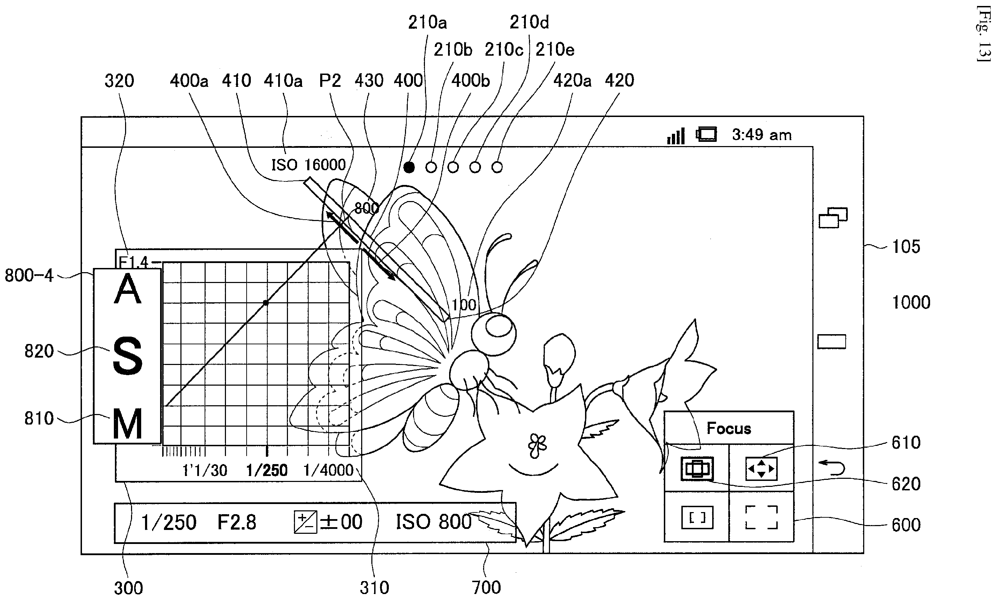

FIG. 13 illustrates a shooting mode setting image 800-4 as another example of the shooting mode setting image. The shooting mode setting image 800-4 is an image with a vertical dial shape (slot type). In the shooting mode setting image 800-4, a plurality of shooting mode symbols 810 that indicate a shooting mode are marked in the vertical direction. A shooting mode symbol 820 in the middle of these shooting mode symbols 810 is highlighted. The shooting mode symbol 820 indicates a shooting mode that is currently set.

The control unit 16 rotates the shooting mode setting image 800-4 in the vertical direction depending on a shooting mode setting operation. For example, when the shooting mode setting operation is an upward flick operation, the control unit 16 rotates the shooting mode setting image 800-4 in the upward direction. On the other hand, when the shooting mode setting operation is a downward flick operation, the control unit 16 rotates the shooting mode setting image 800-4 in the downward direction. The control unit 16 highlights a shooting mode symbol 820 marked in the middle of the shooting mode setting image 800-4.

Then, the control unit 16 sets the current shooting mode to a shooting mode indicated by the shooting mode symbol 820.

The control unit 16 may change the arrangement sequence of the shooting mode symbols 810 on the shooting mode setting images 800-1 to 800-4, in an optional manner or depending on an input operation performed by the user. This is similarly applicable to the widget image 500.

### (1-6. Widget Image Determination Process based on Selection of User)

As described above, the control unit 16 determines a widget image to be arranged in each layer based on a shooting mode. Furthermore, the control unit 16 may determine a widget image to be arranged in each layer based on the user's input operation (a setting image selection operation).

Specifically, when an input operation for shifting to a widget image selection mode (for example, operation for depressing any portion of the operation unit 15 for a long time) is performed, the control unit 16 proceeds to the widget image selection mode.

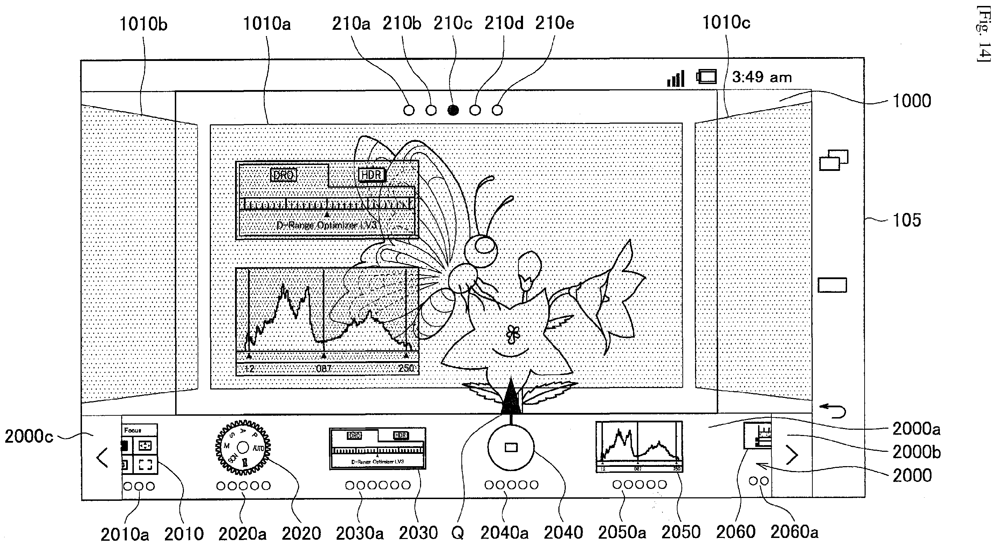

When the process proceeds to the widget image selection mode, the control unit 16 displays layer frame images 1010a, 1010b, and 1010c and a widget icon list image 2000 as shown in FIG. 14.

The layer frame image 1010a indicates an arrangement target layer in which a widget image is to be arranged (a display layer in the initial state). The layer frame image 1010b indicates a layer having the layer number lower by one than that of the display layer, and the layer frame image 1010c indicates a layer having the layer number higher by one than that of the display layer. When the user performs an arrangement target layer switching operation (for example, a horizontal flick operation), the control unit 16 may switch an arrangement target layer. For example, when the right flick operation is performed, the control unit 16 may set the arrangement target layer as a layer having the layer number lower by one than that of the current arrangement target layer. In addition, when the left flick operation is performed, the control unit 16 may set the arrangement target layer as a layer having the layer number higher by one than that of the current arrangement target layer. In addition, in the widget image selection mode, the control unit 16 may highlight an indicator corresponding to the arrangement target layer of the display layer indicators 210a to 210e.

The widget icon list image 2000 includes a belt image 2000a, a shift (scroll) instruction buttons 2000b and 2000c, a plurality of widget icons 2010 to 2060, and widget name images 2010a to 2060a. The belt image 2000a is a strip-shaped image extending in the left and right direction, and can be shifted (scrolled) in the left and right direction. The shift instruction buttons 2000b and 2000c are buttons for shifting the belt image 2000a. In other words, when the user taps the shift instruction button 2000b, the control unit 16 shifts (scrolls) the belt image 2000a in the left direction. On the other hand, when the user taps the shift instruction button 2000c, the control unit 16 shifts the belt image 2000a in the right direction. The control unit 16 may shift the belt image 2000a by the horizontal flick operation.

The widget icons 2010 to 2060 represent a widget image using an icon, and are arranged in the longitudinal direction of the belt image 2000a. The widget name images 2010a to 2060a are arranged below the widget icons 2010 to 2060 and indicate the name of the widget image.

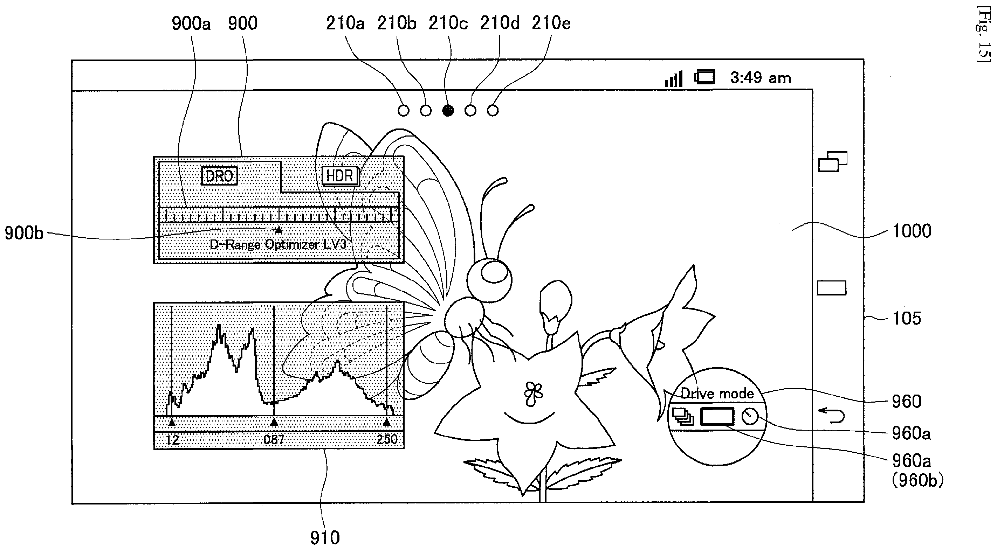

The user drags a widget icon into the layer frame image 1010a. This enables the user to select a widget image corresponding to the widget icon. The control unit 16 arranges the widget image selected by the user in the arrangement target layer. For example, when the user drags the widget icon 2040 into the layer frame image 1010a, the control unit 16 arranges the widget image 960 in the arrangement target layer (the third layer for this example) as shown in FIG. 15.

The widget image 960 is an image that is used to set (select) a drive mode, and includes a plurality of drive mode icons 960a that indicate a drive mode. Any one of the drive mode icons 960a is highlighted. The highlighted drive mode icon 960a, that is, a drive mode icon 960b indicates the drive mode being currently set.

In other words, when the user taps any one of the drive mode icons 960a, the control unit 16 highlights the drive mode icon 960a tapped by the user. Then, the control unit 16 sets a drive mode indicated by the highlighted drive mode icon 960a, that is, the drive mode icon 960b as the current drive mode.

The control unit 16 cancels the widget image selection mode based on the user's operation. For example, when the user depresses the layer frame image 1010a for a long time, the control unit 16 cancels the widget image selection mode.

Thus, the user can arrange a desired widget image in a desired layer. For example, the user can customize a combination between widget images as desired depending on the purpose of shooting.

When the user selects a widget image, the control unit 16 may present (recommend) a relevant widget image associated with the selected widget image. For example, the control unit 16 may arrange the relevant widget image in the same layer as a layer in which the widget image selected by the user is arranged, or may arrange the relevant widget image in a different layer from a layer in which the widget image selected by the user is arranged. In addition, the control unit 16 may highlight a widget icon corresponding to the relevant widget image of the widget icons on the belt image 2000a. In addition, the control unit 16 may present the relevant widget image using audio.

The relevant widget image may be preset, or may set based on the user's use history. In the latter case, for example, if the number of times that a plurality of widget images are used in the same layer is greater than or equal to a predetermined value, then the control unit 16 may determine that these widget images are associated with one another.

The control unit 16 may set a shooting mode based on the widget image selected by the user. For example, when a widget image suitable for a panorama mode (a widget image for setting, for example, angle-of-view correction) is selected, the control unit 16 may set a shooting mode as the panorama mode.

### (1-7. Widget Image Determination Process based on Scene Selection)

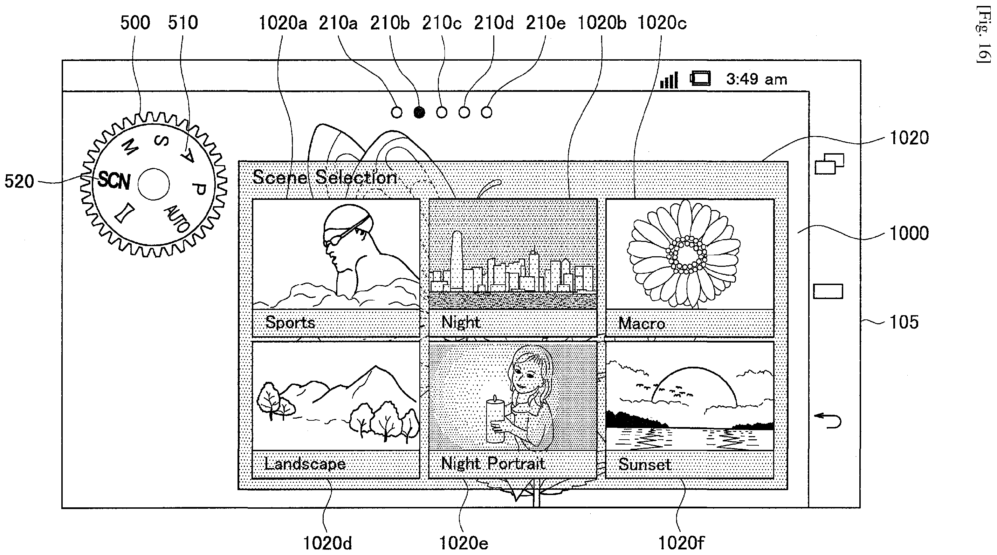

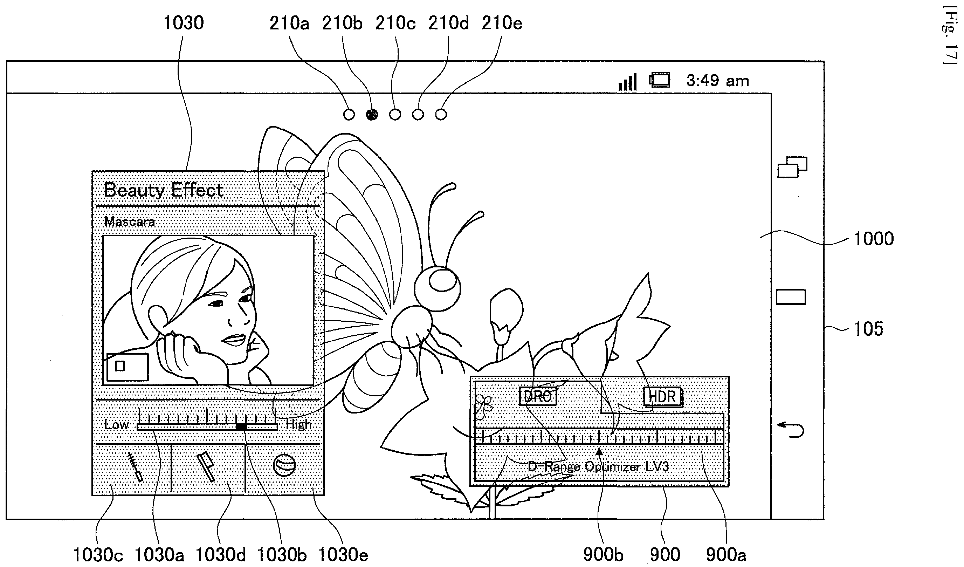

The control unit 16 determines a widget image to be arranged in each layer based on a shooting mode. The shooting mode includes a shooting scene. Thus, the control unit 16 may determine a widget image based on the shooting scene. An example thereof will be described with reference to FIGS. 16 and 17. When the shooting mode is set to a shooting scene selection mode (SCN), the control unit 16 arranges a shooting scene selection image 1020 in a display layer (the second layer for this example) as shown in FIG. 16. The control unit 16 also may arrange another widget image in each layer.

The shooting scene selection image 1020 includes shooting scene icons 1020a to 1020f that indicate a shooting scene. The control unit 16 sets a shooting scene depending on the user's input operation. The input operation includes, for example, an operation of tapping any one of the shooting scene selection icons 1020a to 1020f.

The control unit 16, when setting a shooting scene, determines a widget image to be arranged in each layer based on the shooting scene. For example, when the shooting scene is set to "night portrait" (corresponding to a shooting scene icon 1020e), the control unit 16 arranges the widget images 900 and 1030 in any one layer (the second layer for this example) as shown in FIG. 17.

The widget image 1030 is an image used to set (adjust) the beauty effect, and includes a gauge image 1030a, a pointer 1030b, and beauty effect setting buttons 1030c to 1030e. The gauge image 1030a is a strip-shaped image having a scale formed in the longitudinal direction. Each scale indicates the action amount of the beauty effect (the amount indicating that which one of beauty effects acts on a captured image). The pointer 1030b indicates the action amount of the current beauty effect.

The control unit 16 moves the pointer 1030b in the left and right direction depending on the user's input operation. In this case, the input operation includes, for example, an operation of dragging and dropping the pointer 1030b and an operation of tapping a desired point on the gauge image 1030a. The control unit 16 changes the action amount of the beauty effect to a value indicated by the pointer 1030b.

The beauty effect setting buttons 1030c to 1030e are buttons used to set the types of beauty effect to be adjusted. The control unit 16 adjusts the beauty effect corresponding to a button tapped by the user from among the beauty effect buttons 1030c to 1030e.

### (1-8. Display Control based on Use State of Display Unit)

When the use state of the display unit 14 (display 105) is changed, the control unit 16 maintains the positional relationship between the widget images. In addition, the control unit 16 adjusts the magnification of a widget image so that the widget image fits within the display unit 14. The positional relationship refers to the display position of each widget image relative to another widget image.

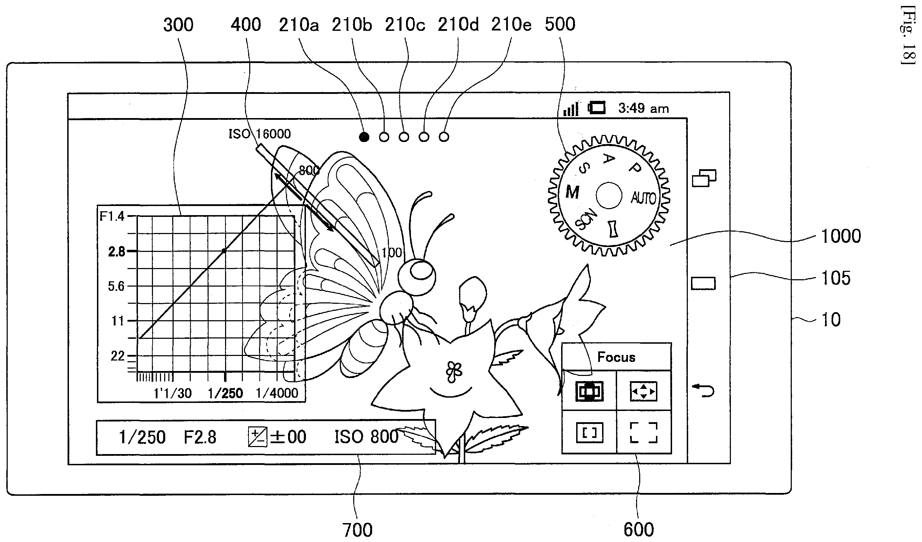

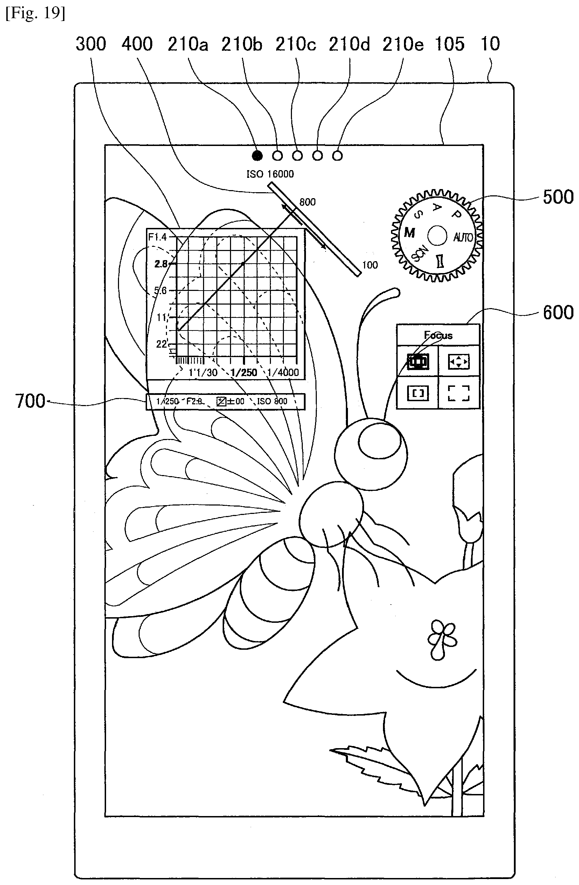

A display example will be described with reference to FIGS. 18 and 19. When the widget images 300 to 700 are arranged in the first layer and the display unit 14 is used in the landscape orientation, the control unit 16 displays, for example, an image shown in FIG. 18. When the use state of the display unit 14 is changed to the portrait orientation, the control unit 16 maintains the positional relationship between the widget images 300 to 700 and reduces the size of the widget images 300 to 700 as shown in FIG. 19. For example, the widget image 300 is displayed on the upper side of the widget image 700 as shown in FIG. 18, and thus the control unit 16 displays the widget image 300 on the upper side of the widget image 700 even when the use state of the display unit 14 is changed to the portrait orientation.

The control unit 16 also may adjust the positional relationship between widget images depending on the use state. For example, when the use state of the display unit 14 is changed to the landscape orientation, the control unit 16 may arrange the widget images 300 to 700 in the up and down direction.

### (1-9. Other Processes)

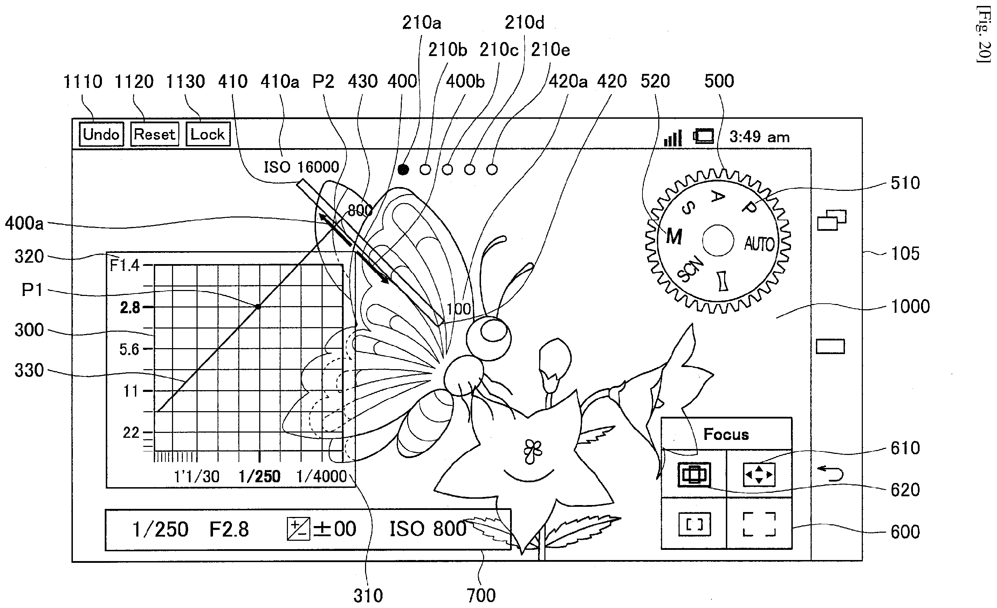

Other processes are now described with reference to FIG. 20. The control unit 16 may display an undo button 1110, a reset button 1120, and a lock button 1130 together with a display layer. When the user taps the undo button 1110, the control unit 16 restores the state of each image to the state of the operation performed previously by one operation by the user. When the reset button 1120 is tapped, the control unit 16 restores the display state to its initial state. The control unit 16 may restore the display state for every layer to its initial state, or may restore the display state of the entire layer to its initial state. The control unit 16 may restore the display state to a state previously set (so-called custom reset). This function is useful, for example, at the time of demonstration of the information processing apparatus 10. For example, when a demonstrator describes the operation of the information processing apparatus 10 to one user, the custom reset is performed before the demonstrator begins to describe it to another user. This makes it possible for the demonstrator to restore easily the display state of the information processing apparatus 10 to the state before the description to the one user.

When the lock button 1130 is tapped, the control unit 16 rejects (refuse to accept) a user's input operation.

When the lock button 1130 is tapped again, the control unit 16 accepts the input operation performed by the user. The display of any one of the undo button 1110, the reset button 1120, and the lock button 1130 may be omitted. Some of these buttons may be a hard key.

As described above, according to the present embodiment, the information processing apparatus 10 displays any one layer of a plurality of layers in which a widget image is arranged on the display unit 14 as a display layer and switches the display layer. Furthermore, the information processing apparatus 10 sets a shooting parameter depending on an input operation. Thus, the user can set a shooting parameter using a desired widget image displayed on a desired layer, thereby setting the shooting parameter easily. When the user performs the display layer switching operation, the information processing apparatus 10 switches a display layer. Thus, the user can display a desired layer easily.

The information processing apparatus 10 determines a widget image to be arranged in each layer based on a shooting mode, and thus it can arrange the widget image in each layer depending on the user's shooting purpose. Accordingly, the user can set a desired shooting parameter easily.

The information processing apparatus 10 determines the priority of a widget image based on a shooting mode, and sets a widget image to be arranged in each layer based on the priority. Thus, the user can find out more easily a desired widget image.

When the user performs the shooting mode setting operation, the information processing apparatus 10 displays a shooting mode setting image used to set a shooting mode. Thus, the shooting mode setting image is hardly obstructive to the user. In addition, the user can change easily a shooting mode to a desired mode by using the shooting mode setting image.

The information processing apparatus 10 performs control for arranging a widget image selected by the user in each layer. Thus, the user can arrange a desired widget image in a desired layer.

Furthermore, the information processing apparatus 10 performs control for presenting a relevant widget image associated with the widget image selected by the user. Thus, the user can grasp easily a shooting parameter that is necessary for a desired shooting and adjust easily the shooting parameter.

Moreover, the information processing apparatus 10 may arrange the relevant widget image in the same layer as a layer in which a widget image selected by the user is arranged, or may arrange the relevant widget image in a different layer from a layer in which a widget image selected by the user is arranged. This saves the user a lot of time and trouble trying to arrange the relevant widget image in a layer. Furthermore, the information processing apparatus 10 sets a shooting mode based on a widget image selected by the user. Thus, the user can capture a desired image easily.

Moreover, the information processing apparatus 10 changes a way of performing the display layer switching operation depending on a shooting mode. Thus, the information processing apparatus 10 can reduce the possibility for the user to confuse the display layer switching operation with other operations. When the use state of the display unit 14 is changed, the information processing apparatus 10 also maintains the positional relationship between widget images. Thus, even when the use state of the display unit 14 is changed, the user is much less likely to be confused.

### (2. Second Embodiment)

The second embodiment is now described. In the second embodiment, the information processing apparatus and the imaging device are separated.

### (2-1. Overall Configuration of Information Processing System)

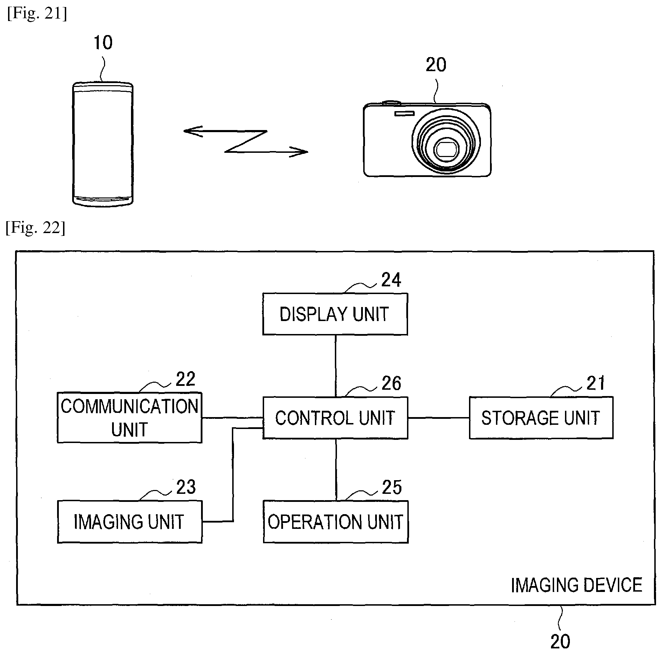

The configuration of the information processing system according to the second embodiment is now described with reference to FIG. 21. The information processing system includes the information processing apparatus 10 and the imaging device 20. The information processing apparatus 10 and the imaging device 20 can communicate with each other. The information processing apparatus 10 performs a process similar to that of the first embodiment described above. However, the information processing apparatus 10 acquires a through-the-lens image and a captured image by communication with the imaging device 20. In addition, the information processing apparatus 10 outputs setting value information related to a setting value of a shooting parameter to the imaging device 20.

### (2-2. Configuration of Imaging Device)

The configuration of the information processing apparatus 10 is substantially similar to that of the first embodiment. In the second embodiment, the information processing apparatus 10 may not include the imaging unit 13. The configuration of the imaging device 20 is now described.

As shown in FIG. 22, the imaging device 20 includes a storage unit 21, a communication unit 22, an imaging unit 23, a display unit 24, an operation unit 25, and a control unit 26. The storage unit 21 stores a program which causes the imaging device 20 to execute functions of the storage unit 21, the communication unit 22, the imaging unit 23, the display unit 24, the operation unit 25, and the control unit 26. The storage unit 21 also stores various types of image information.

The communication unit 22 communicates with the information processing apparatus 10. For example, the communication unit 22 transmits the through-the-lens image supplied from the control unit 26 to the information processing apparatus 10. In addition, the communication unit 22 outputs the setting value information supplied from the information processing apparatus 10 to the control unit 26. The imaging unit 23 captures an image. Specifically, the imaging unit 23 outputs an image captured by an image sensor to the control unit 26 as a through-the-lens image until the user performs a shooting operation (for example, an operation of depressing a shutter button which is not shown). When the user performs a shooting operation, the imaging unit 23 captures an image (specifically, performs an action such as releasing a shutter) depending on the setting values the Tv/Av value and ISO value. Then, the imaging unit 23 outputs the image captured by the image sensor to the control unit 26 as a captured image.

The display unit 24 displays various types of images, for example, a through-the-lens image and a captured image. The display unit 24 may display the widget image described above. The operation unit 25 includes a so-called hard key, which is disposed on each site of the imaging device 20. The operation unit 25 outputs operation information related to the input operation performed by the user to the control unit 26. The control unit 26 controls the entire imaging device 20, and outputs a through-the-lens image to the communication unit 22. In addition, the control unit 26 performs setting of the imaging unit 23 based on the setting value information.

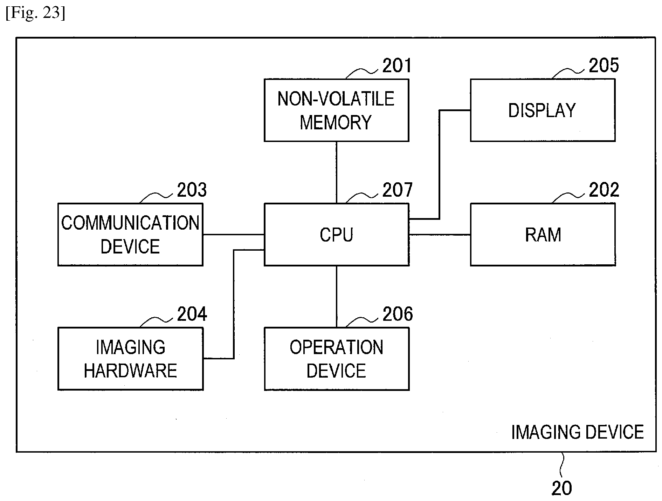

The imaging device 20 has the hardware configuration shown in FIG. 23, and such hardware configuration allows the storage unit 21, the communication unit 22, the imaging unit 23, the display unit 24, the operation unit 25, and the control unit 26 to be executed.

In other words, the imaging device 20 is configured to include a non-volatile memory 201, a RAM 202, a communication device 203, an imaging hardware 204, a display 205, an operation device (for example, a hard key) 206, and a CPU 207, as its hardware configuration.

The non-volatile memory 201 stores, for example, various programs and image information. The program stored in the non-volatile memory includes a program which causes the imaging device 20 to execute functions of the storage unit 21, the communication unit 22, the imaging unit 23, the display unit 24, the operation unit 25, and the control unit 26.

The RAM 202 is used as a work area of the CPU 207. The communication device 203 communicates with the information processing apparatus 10. The imaging hardware 204 has a configuration similar to that of the imaging device 104. In other words, the imaging hardware 204 captures an image and generates a captured image. The display 205 displays various types of image information. The display 205 may output audio information. The operation device 206 accepts various input operations performed by the user.

The CPU 207 reads out and executes the program stored in the non-volatile memory 201. Thus, the CPU 207, which reads out and executes the program stored in the non-volatile memory 201, allows the imaging device 20 to execute functions of the storage unit 21, the communication unit 22, the imaging unit 23, the display unit 24, the operation unit 25, and the control unit 26. In other words, the CPU 207 functions as a component for practically operating the imaging device 20.

### (2-3. Process of Information Processing System)

The process of the information processing system is similar to the process performed by the information processing apparatus 10 described above. However, the information processing system is different from the first embodiment in that the imaging device 20 creates a through-the-lens image and transmits it to the information processing apparatus 10 and the information processing apparatus 10 transmits setting value information to the imaging device 20.

According to the second embodiment, the user also can easily set a shooting parameter. In addition, the user can remotely operate a shooting parameter of the imaging device 20 using the information processing apparatus 10, thereby further improving the usability of widget image.

According to the first and second embodiments, the above and other advantages will become apparent from the description given herein.

The preferred embodiments of the present disclosure have been described above in detail with reference to the accompanying drawings, but the technical scope of the present disclosure is not limited to the above examples. A person skilled in the art may find various alterations and modifications within the scope of the appended claims, and it should be understood that they will naturally come under the technical scope of the present disclosure.

For example, the embodiments of the present disclosure may include at least the following configurations:
(1) An electronic apparatus, comprising:
   a processor; and
   a memory having program code stored thereon, the program code being such that, when it is executed by the processor, it causes the processor to:
      control display of a plurality of parameter-setting display layers, each having arranged therein at least one parameter-setting-widget selected from a collection of parameter-setting-widgets that relate to values of imaging parameters, where at least one of the plurality of parameter-setting display layers has more than one of the parameter-setting-widgets arranged therein.
(2) The electronic apparatus of (1), wherein the program code is such that, when it is executed by the processor, it further causes the processor to:
   receive a selection of an imaging mode; and
   in controlling the display of the plurality of parameter-setting display layers, determine which ones of the collection of parameter-setting-widgets to allocate to which of the plurality of parameter-setting display layers based on the selected imaging mode.
(3) The electronic apparatus of any of (1) and (2), wherein the program code is such that, when it is executed by the processor, it further causes the processor to:
   in determining which ones of the collection of parameter-setting-widgets to allocate to which of the plurality of parameter-setting display layers, assign a priority to each of the parameter-setting-widgets based on the selected imaging mode, where the parameter-setting-widgets are allocated to the plurality of parameter-setting display layers in accordance with the assigned priorities.
(4) The electronic apparatus of any of (1) through (3), wherein the program code is such that, when it is executed by the processor, it further causes the processor to:
   control display of an imaging-mode-setting widget that enables the user to select the imaging mode.
(5) The electronic apparatus any of (1) through (4), wherein the program code is such that, when it is executed by the processor, it further causes the processor to:
   in response to receiving a predetermined user input, superimpose the imaging-mode-setting widget over a currently selected parameter-setting display layer.
(6) The electronic apparatus any of (1) through (5), wherein the program code is such that, when it is executed by the processor, it further causes the processor to:
   control display of a widget-arrangement interface that enables the user to allocate the collection of parameter-setting-widgets among the plurality of parameter-setting display layers for the selected imaging mode; and
   receive user input via the widget-allocation interface allocating at least a given one of the parameter-setting-widgets to a given one of the plurality of parameter-setting display layers, wherein the determining of which parameter-setting-widgets to allocate to which of the plurality of parameter-setting display layers is further based on the received user input allocating the given parameter-setting-widget.
(7) The electronic apparatus of any of (1) through (6), wherein controlling the display of the widget-arrangement interface includes generating a graphical representation of at least one of the plurality of layers in a first display region and a graphical representation of at least one of the parameter-setting-widget images in a second display region,
   wherein the user allocates the given parameter-setting-widget to the given parameter-setting display layer by dragging the graphical representation of the given parameter-setting-widget in the widget-arrangement interface onto the graphical representation of the given parameter-setting display layer.
(8) The electronic apparatus of any of (1) through (7), wherein the program code is such that, when it is executed by the processor, it further causes the processor to:
   in response to the user selecting the graphical representation of the given parameter-setting-widget in the widget-arrangement interface, identifying another one of the parameter-setting-widgets that is relevant to the given parameter-setting-widget.
(9) The electronic apparatus of any of (1) through (8), wherein the program code is such that, when it is executed by the processor, it further causes the processor to:
   visually highlight in the widget-arrangement interface the identified parameter-setting-widget that is relevant to the given parameter-setting-widget.
(10) The electronic apparatus of any of (1) through (9), wherein the program code is such that, when it is executed by the processor, it further causes the processor to:
   in response to a user input that associates the graphical representation of the given parameter-setting-widget in the widget-arrangement interface with the graphical representation of the given parameter-setting display layer, automatically associate the graphical representation of the identified parameter-setting-widget that is relevant to the given parameter-setting-widget with the graphical representation of the given parameter-setting display layer.
(11) The electronic apparatus of any of (1) through (10), wherein the allocation of the plurality of parameter-setting-widgets among the plurality of parameter-setting display layers depends upon an imaging mode that is selected.
(12) The electronic apparatus of any of (1) through (11), wherein the program code is such that, when it is executed by the processor, it further causes the processor to:
   control display of an image-for-display by superimposing over a captured image the parameter-setting-widgets allocated to a selected layer of the plurality of parameter-setting display layers.
(13) The electronic apparatus of any of (1) through (12), wherein the program code is such that, when it is executed by the processor, it further causes the processor to:
   switch the one of the plurality of layers that is the selected layer based on a user input.
(14) The electronic apparatus of any of (1) through (13), further comprising an image sensor.
(15) The electronic apparatus of any of (1) through (14), wherein the program code is such that, when it is executed by the processor, it further causes the processor to:
   control display of an image-for-display by superimposing, over a through-the-lens-image captured by the image sensor, the parameter-setting-widgets allocated to a selected layer of the plurality of parameter-setting display layers.
(16) The electronic apparatus of any of (1) through (15), further comprising a display unit that displays an image-for-display generated by the processor.
(17) The electronic apparatus of any of (1) through (16), further comprising:
   an image sensor; and
   a display unit that displays an image-for-display generated by the processor.
(18) A non-transitory computer readable medium having program code stored thereon, the program code being such that, when it is executed by an information processing device, it causes the information processing device to:
   generate a plurality of parameter-setting display layers, each having arranged therein at least one parameter-setting-widget selected from a collection of parameter-setting-widgets that relate to values of imaging parameters, where at least one of the plurality of parameter-setting display layers has more than one of the parameter-setting-widgets arranged therein; and
   display a selected one of the plurality of parameter-setting display layers.
(19) The non-transitory computer readable medium of (18), wherein the program code is such that, when it is executed by the information processing device, it further causes the information processing device to:
   receive a selection of an imaging mode; and
   in generating the plurality of parameter-setting display layers, determine which ones of the collection of parameter-setting-widgets to allocate to which of the plurality of parameter-setting display layers based on the selected imaging mode.
(20) The non-transitory computer readable medium of any of (18) and (19), wherein the program code is such that, when it is executed by the information processing device, it further causes the information processing device to:
   in determining which ones of the collection of parameter-setting-widgets to allocate to which of the plurality of parameter-setting display layers, assign a priority to each of the parameter-setting-widgets based on the selected imaging mode, where the parameter-setting-widgets are allocated to the plurality of parameter-setting display layers in accordance with the assigned priorities.
(21) The non-transitory computer readable medium of any of (18) through (20), wherein the program code is such that, when it is executed by the information processing device, it further causes the information processing device to:
   display an imaging-mode-setting widget that enables the user to select the imaging mode.
(22) The non-transitory computer readable medium of any of (18) through (21), wherein, in response to receiving a predetermined user input, the imaging-mode-setting widget is displayed as an image superimposed over a currently displayed parameter-setting display layer.
(23) The non-transitory computer readable medium of any of (18) through (22), wherein the program code is such that, when it is executed by the information processing device, it further causes the information processing device to:
   display a widget-arrangement interface that enables the user to allocate the collection of parameter-setting-widgets among the plurality of parameter-setting display layers for the selected imaging mode; and
   receive user input via the widget-allocation interface allocating at least a given one of the parameter-setting-widgets to a given one of the plurality of parameter-setting display layers, wherein the determining of which parameter-setting-widgets to allocate to which of the plurality of parameter-setting display layers is further based on the received user input allocating the given parameter-setting-widget.
(24) The non-transitory computer readable medium of any of (18) through (23),
   wherein displaying the widget-arrangement interface includes displaying a graphical representation of at least one of the plurality of layers in a first display region and displaying a graphical representation of at least one of the parameter-setting-widget images in a second display region,
   wherein the user allocates the given parameter-setting-widget to the given parameter-setting display layer by dragging the graphical representation of the given parameter-setting-widget in the widget-arrangement interface onto the graphical representation of the given parameter-setting display layer.
(25) The non-transitory computer readable medium of any of (18) through (24), wherein the program code is such that, when it is executed by the information processing device, it further causes the information processing device to:
   in response to the user selecting the graphical representation of the given parameter-setting-widget in the widget-arrangement interface, identifying another one of the parameter-setting-widgets that is relevant to the given parameter-setting-widget.
(26) The non-transitory computer readable medium of any of (18) through (25), wherein the program code is such that, when it is executed by the information processing device, it further causes the information processing device to:
   visually highlight in the widget-arrangement interface the identified parameter-setting-widget that is relevant to the given parameter-setting-widget.
(27) The non-transitory computer readable medium of any of (18) through (26), wherein the program code is such that, when it is executed by the information processing device, it further causes the information processing device to:
   in response to the graphical representation of the given parameter-setting-widget in the widget-arrangement interface being dragged by the user onto the graphical representation of the given parameter-setting display layer, automatically moving the graphical representation of the identified parameter-setting-widget that is relevant to the given parameter-setting-widget onto the graphical representation of the given parameter-setting display layer.
(28) The non-transitory computer readable medium of any of (18) through (27), wherein the allocation of the plurality of parameter-setting-widgets among the plurality of parameter-setting display layers depends upon an imaging mode that is selected.
(29) The non-transitory computer readable medium of any of (18) through (27), wherein the selected one of the plurality of parameter-setting display layers is displayed by superimposing the parameter-setting-widgets allocated thereto over a captured image.
(30) The non-transitory computer readable medium of any of (18) through (29), wherein the program code is such that, when it is executed by the information processing device, it further causes the information processing device to:
   switch the one of the plurality of layers that is displayed in response to receiving a layer-switch input from a user.
(31) A method of operating an information processing apparatus, comprising:
   generating a plurality of parameter-setting display layers, each having arranged therein at least one parameter-setting-widget selected from a collection of parameter-setting-widgets that enable a user to set values of imaging parameters, where at least one of the plurality of parameter-setting display layers has more than one of the parameter-setting-widgets arranged therein; and
   displaying a selected one of the plurality of parameter-setting display layers.
(32) The method of (31), further comprising:
   receiving a selection of an imaging mode; and
   in generating the plurality of parameter-setting display layers, determining which ones of the collection of parameter-setting-widgets to allocate to which of the plurality of parameter-setting display layers based on the selected imaging mode.
(33) The method of any of (31) and (32), further comprising:
   in determining which ones of the collection of parameter-setting-widgets to allocate to which of the plurality of parameter-setting display layers, assigning a priority to each of the parameter-setting-widgets based on the selected imaging mode, where the parameter-setting-widgets are allocated to the plurality of parameter-setting display layers in accordance with the assigned priorities.
(34) The method of any of (31) through (33), further comprising:
   displaying an imaging-mode-setting widget that enables the user to select the imaging mode.
(35) The method of any of (31) through (34), wherein, in response to receiving a predetermined user input, the imaging-mode-setting widget is displayed as an image superimposed over a currently displayed parameter-setting display layer.
(36) The method of any of (31) through (35), further comprising:
   displaying a widget-arrangement interface that enables the user to allocate the collection of parameter-setting-widgets among the plurality of parameter-setting displaying layers for the selected imaging mode; and
   receiving user input via the widget-allocation interface allocating at least a given one of the parameter-setting-widgets to a given one of the plurality of parameter-setting display layers, wherein the determining of which parameter-setting-widgets to allocate to which of the plurality of parameter-setting display layers is further based on the received user input allocating the given parameter-setting-widget.
(37) The method of any of (31) through (36),
   wherein displaying the widget-arrangement interface includes displaying a graphical representation of at least one of the plurality of layers in a first display region and displaying a graphical representation of at least one of the parameter-setting-widget images in a second display region, and
   wherein the user allocates the given parameter-setting-widget to the given parameter-setting display layer by dragging the graphical representation of the given parameter-setting-widget in the widget-arrangement interface onto the graphical representation of the given parameter-setting display layer.
(38) The method of any of (31) through (37), further comprising:
   in response to the user selecting the graphical representation of the given parameter-setting-widget in the widget-arrangement interface, identifying another one of the parameter-setting-widgets that is relevant to the given parameter-setting-widget.
(39) The method of any of (31) through (38), further comprising:
   visually highlighting in the widget-arrangement interface the identified parameter-setting-widget that is relevant to the given parameter-setting-widget.
(40) The method of any of (31) through (39), further comprising:
   in response to the graphical representation of the given parameter-setting-widget in the widget-arrangement interface being dragged by the user onto the graphical representation of the given parameter-setting display layer, automatically moving the graphical representation of the identified parameter-setting-widget that is relevant to the given parameter-setting-widget onto the graphical representation of the given parameter-setting display layer.
(42) The method of any of (31) through (40), wherein the allocation of the plurality of parameter-setting-widgets among the plurality of parameter-setting display layers depends upon an imaging mode that is selected.
(43) The method of any of (31) through (42), wherein the selected one of the plurality of parameter-setting display layers is displayed by superimposing the parameter-setting-widgets allocated thereto over a captured image.
(44) The method of any of (31) through (43), further comprising:
   switching the one of the plurality of layers that is displayed in response to receiving a layer-switch input from a user.

(A01)
   An information processing apparatus capable of setting a shooting parameter related to imaging depending on an operation input, the information processing apparatus including:
   a control unit configured to perform control of displaying any one of a plurality of layers in which a shooting parameter setting image is arranged as a display layer on a display unit and to perform control of switching the display layer, the shooting parameter setting image being used to set the shooting parameter.
(A02)
   The information processing apparatus according to (A01), wherein the control unit switches the display layer when a display layer switching operation for switching the display layer is performed.
(A03)
   The information processing apparatus according to (A01) or (A02), wherein the control unit determines a shooting parameter setting image to be arranged in each layer based on a shooting mode.
(A04)
   The information processing apparatus according to (A03), wherein the control unit determines a priority of the shooting parameter setting image based on the shooting mode and determines a shooting parameter setting image to be arranged in each layer based on the priority.
(A05)
   The information processing apparatus according to (A03) or (A04), wherein the control unit performs control of displaying a shooting mode setting image used to set the shooting mode when a shooting mode setting operation for setting the shooting mode is performed.
(A06)
   The information processing apparatus according to any one of (A01) to (A05), wherein the control unit performs control of arranging a display target setting image in each layer, the display target setting image being a setting image selected by a setting image selection operation for selecting a shooting parameter setting image to be arranged in each layer.
(A07)
   The information processing apparatus according to (A06), wherein the control unit performs control of presenting a relevant setting image associated with the display target setting image.
(A08)
   The information processing apparatus according to (A07), wherein the control unit perform control of displaying the relevant setting image on the same layer as a layer of the display target setting image or on a different layer from the layer of the display target setting image.
(A09)
   The information processing apparatus according to any one of (A06) to (A08), wherein the control unit sets a shooting mode based on the display target setting image.
(A10)
   The information processing apparatus according to (A02), wherein the control unit changes a way of performing the display layer switching operation depending on a shooting mode.
(A11)
   The information processing apparatus according to any one of (A01) to (A10), wherein the control unit maintains a positional relationship between the shooting parameter setting images when a use state of the display unit is changed.
(A12)
   The information processing apparatus according to any one of (A01) to (A11), wherein the control unit performs control of displaying a widget image as the shooting parameter setting image.
(A13)
   An information processing method including:
   performing control of displaying any one of a plurality of layers in which a shooting parameter setting image is arranged as a display layer on a display unit and performing control of switching the display layer, the shooting parameter setting image being used to set a shooting parameter related to imaging; and performing control of setting the shooting parameter depending on an input operation.
(A14)
   A program for causing a computer to realize:
   a control function of performing control of displaying any one of a plurality of layers in which a shooting parameter setting image is arranged as a display layer on a display unit, the shooting parameter setting image being used to set a shooting parameter related to imaging, performing control of switching the display layer, and performing control of setting the shooting parameter depending on an operation input.
(A15)
   An information processing system capable of setting a shooting parameter related to imaging depending on an operation input, the information processing system including:
   a control unit configured to perform control of displaying any one of a plurality of layers in which a shooting parameter setting image is arranged as a display layer on a display unit and to perform control of switching the display layer, the shooting parameter setting image being used to set the shooting parameter.

The application could be configured in accordance with the following clauses:
B1. An electronic apparatus, comprising:
   a processor; and
   a memory having program code stored thereon, the program code being such that, when it is executed by the processor, it causes the processor to:
      control display of a plurality of parameter-setting display layers, each having arranged therein at least one parameter-setting-widget selected from a collection of parameter-setting-widgets that relate to values of imaging parameters, where at least one of the plurality of parameter-setting display layers has more than one of the parameter-setting-widgets arranged therein.
B2. The electronic apparatus of clause B1, wherein the program code is such that, when it is executed by the processor, it further causes the processor to:
   receive a selection of an imaging mode; and
   in controlling the display of the plurality of parameter-setting display layers, determine which ones of the collection of parameter-setting-widgets to allocate to which of the plurality of parameter-setting display layers based on the selected imaging mode.
B3. The electronic apparatus of clause B2, wherein the program code is such that, when it is executed by the processor, it further causes the processor to:
   in determining which ones of the collection of parameter-setting-widgets to allocate to which of the plurality of parameter-setting display layers, assign a priority to each of the parameter-setting-widgets based on the selected imaging mode, where the parameter-setting-widgets are allocated to the plurality of parameter-setting display layers in accordance with the assigned priorities.
B4. The electronic apparatus of clause B2, wherein the program code is such that, when it is executed by the processor, it further causes the processor to:
   control display of an imaging-mode-setting widget that enables the user to select the imaging mode.
B5. The electronic apparatus of clause B4, wherein the program code is such that, when it is executed by the processor, it further causes the processor to:
   in response to receiving a predetermined user input, superimpose the imaging-mode-setting widget over a currently selected parameter-setting display layer.
B6. The electronic apparatus of clause B2, wherein the program code is such that, when it is executed by the processor, it further causes the processor to:
   control display of a widget-arrangement interface that enables the user to allocate the collection of parameter-setting-widgets among the plurality of parameter-setting display layers for the selected imaging mode; and
   receive user input via the widget-allocation interface allocating at least a given one of the parameter-setting-widgets to a given one of the plurality of parameter-setting display layers, wherein the determining of which parameter-setting-widgets to allocate to which of the plurality of parameter-setting display layers is further based on the received user input allocating the given parameter-setting-widget.
B7. The electronic apparatus of clause B6, wherein controlling the display of the widget-arrangement interface includes generating a graphical representation of at least one of the plurality of layers in a first display region and a graphical representation of at least one of the parameter-setting-widget images in a second display region,
   wherein the user allocates the given parameter-setting-widget to the given parameter-setting display layer by dragging the graphical representation of the given parameter-setting-widget in the widget-arrangement interface onto the graphical representation of the given parameter-setting display layer.
B8. The electronic apparatus of clause B7, wherein the program code is such that, when it is executed by the processor, it further causes the processor to:
   in response to the user selecting the graphical representation of the given parameter-setting-widget in the widget-arrangement interface, identifying another one of the parameter-setting-widgets that is relevant to the given parameter-setting-widget.
B9. The electronic apparatus of clause B8, wherein the program code is such that, when it is executed by the processor, it further causes the processor to:
   visually highlight in the widget-arrangement interface the identified parameter-setting-widget that is relevant to the given parameter-setting-widget.
B10. The electronic apparatus of clause B8, wherein the program code is such that, when it is executed by the processor, it further causes the processor to:
   in response to a user input that associates the graphical representation of the given parameter-setting-widget in the widget-arrangement interface with the graphical representation of the given parameter-setting display layer, automatically associate the graphical representation of the identified parameter-setting-widget that is relevant to the given parameter-setting-widget with the graphical representation of the given parameter-settin'g display layer.
B11. The electronic apparatus of clause B1, wherein the allocation of the plurality of parameter-setting-widgets among the plurality of parameter-setting display layers depends upon an imaging mode that is selected.
B12. The electronic apparatus of clause B1, wherein the program code is such that, when it is executed by the processor, it further causes the processor to:
   control display of an image-for-display by superimposing over a captured image the parameter-setting-widgets allocated to a selected layer of the plurality of parameter-setting display layers.
B13. The electronic apparatus of clause B12, wherein the program code is such that, when it is executed by the processor, it further causes the processor to:
   switch the one of the plurality of layers that is the selected layer based on a user input.
B14. The electronic apparatus of clause B1, further comprising an image sensor.
B15. The electronic apparatus of clause B14, wherein the program code is such that, when it is executed by the processor, it further causes the processor to:
   control display of an image-for-display by superimposing, over a through-the-lens-image captured by the image sensor, the parameter-setting-widgets allocated to a selected layer of the plurality of parameter-setting display layers.
B16. The electronic apparatus of clause B1, further comprising a display unit that displays an image-for-display generated by the processor.
B17. The electronic apparatus of clause B1, further comprising:
   an image sensor; and
   a display unit that displays an image-for-display generated by the processor.
B18. A non-transitory computer readable medium having program code stored thereon, the program code being such that, when it is executed by an information processing device, it causes the information processing device to:
   generate a plurality of parameter-setting display layers, each having arranged therein at least one parameter-setting-widget selected from a collection of parameter-setting-widgets that relate to values of imaging parameters, where at least one of the plurality of parameter-setting display layers has more than one of the parameter-setting-widgets arranged therein; and
   display a selected one of the plurality of parameter-setting display layers.
B19. The non-transitory computer readable medium of clause B18, wherein the program code is such that, when it is executed by the information processing device, it further causes the information processing device to:
   receive a selection of an imaging mode; and
   in generating the plurality of parameter-setting display layers, determine which ones of the collection of parameter-setting-widgets to allocate to which of the plurality of parameter-setting display layers based on the selected imaging mode.
B20. The non-transitory computer readable medium of clause B19, wherein the program code is such that, when it is executed by the information processing device, it further causes the information processing device to:
   in determining which ones of the collection of parameter-setting-widgets to allocate to which of the plurality of parameter-setting display layers, assign a priority to each of the parameter-setting-widgets based on the selected imaging mode, where the parameter-setting-widgets are allocated to the plurality of parameter-setting display layers in accordance with the assigned priorities.
Further embodiments of the invention are defined in the following numbered clauses:
C1. An information processing apparatus (10), comprising:
   a display device having a touch panel arranged on a surface; and
   a processor (107) configured to:
      control the display device to display a through-the-lens image;
      control the display device to display a first parameter-setting image of a plurality of parameter-setting images, wherein the first parameter-setting image is displayed superimposed on the through-the-lens image output by an image sensor;
      control the display device to display a selected shooting mode indicator (820) indicating a selected shooting mode from a plurality of shooting modes;
      control the display device to switch the selected shooting mode to another shooting mode based on a flick operation on the touch panel; and control the display device to switch display of the first parameter-setting image with a second parameter-setting image of the plurality of parameter-setting images based on the flick operation.
C2. The information processing apparatus according to clause C1, wherein
   the selected shooting mode indicator is highlighted on the display device and displayed concurrently with the through-the-lens image on the display device
C3. The information processing apparatus according to any preceding C clause, wherein
   the processor is configured to control the display device to display a plurality of shooting mode indicators (810) including the selected shooting mode indicator; and
   each of the shooting mode indicators relate to one of the shooting modes.
C7. The information processing apparatus according to clause C3, wherein
   the processor is configured to change an arrangement sequence of the plurality of shooting mode indicators in response to an input operation performed by the user.
C8. The information processing apparatus according to any one of clause C3-C4, wherein
   the selected shooting mode indicator is displayed in the middle of the plurality of shooting mode indicators.
C9. The information processing apparatus according to any preceding C clause, wherein
   the plurality of shooting mode indicators relate to a subset of the shooting modes.
C10. The information processing apparatus according to any preceding C clause, wherein
   the second parameter-setting image is selected from the plurality of parameter-setting images based on the another shooting mode.
C11. The information processing apparatus according to clause C10, wherein
   when the another shooting mode is set to a program mode, the second parameter-setting image is for setting one of: exposure, ISO, scene mode, drive mode, and picture effect.
C12. The information processing apparatus according to any one of clause C10-C11, wherein when the another shooting mode is set to an aperture priority mode, the second parameter-setting image is for setting one of: creative style, beauty effect, manual focus, focus magnification, and a level.
C13. The information processing apparatus according to any one of clause C10-C12, wherein when the another shooting mode is set to a shutter speed priority mode, the second parameter-setting image is for setting one of: a drive mode, auto focus, tracking focus, bracket shooting, and ISO.
C14. A method comprising: controlling a display device to display a through-the-lens image;
   controlling the display device to display a first parameter-setting image of a plurality of parameter-setting images, wherein the first parameter-setting image is displayed superimposed on the through-the-lens image output by an image sensor;
   controlling the display device to display a selected shooting mode indicator (820) indicating a selected shooting mode from a plurality of shooting modes;
   controlling the display device to switch the selected shooting mode to another shooting mode based on a flick operation on a touch panel arranged on a surface of the display device; and
   controlling the display device to switch display of the first parameter-setting image with a second parameter-setting image of the plurality of parameter-setting images based on the flick operation.
C15. A computer program comprising instructions which, when the program is executed by a computer, cause the computer to carry out the method of clause C 14.

### [Reference Signs List]

10 information processing apparatus
11, 21 storage unit
12, 22 communication unit
13, 23 imaging unit
14, 24 display unit
15, 25 operation unit
16, 26 control unit
20 imaging device
101, 201 non-volatile memory
102, 202 RAM
103, 203 communication device
104 imaging device
105, 205 display
106 touch panel
204 imaging hardware
206 operation device (hard key and other device)
210 display layer indicator
300 to 700 widget image
800-1 to 800-4 shooting mode setting image
1110 undo button
1120 reset button
1130 lock button
1000 through-the-lens image (captured image)
2000 widget icon list image

## Claims

1. An information processing apparatus (10), comprising:
a display device having a touch panel arranged on a surface; and
a processor (107) configured to:
control the display device to display a through-the-lens image output by an image sensor;
determine a selected shooting mode from a plurality of shooting modes based on a flick operation on the touch panel; and
control the display device to display at least one setting image according to the selected shooting mode, wherein
the at least one setting image is displayed on the through-the-lens image; and
the at least one setting image displayed in a first shooting mode is different from that in a second shooting mode.

2. The information processing apparatus according to claim 1, wherein
the selected shooting mode is highlighted on the display device and displayed concurrently with the through-the-lens image on the display device

3. The information processing apparatus according to any preceding claim, wherein
the processor is configured to control the display device to display a plurality of setting images including the setting image; and each of the setting images relate to one of the shooting modes.

4. The information processing apparatus according to claim 3, wherein
the processor is configured to change an arrangement sequence of the plurality of setting images in response to an input operation performed by the user.

5. The information processing apparatus according to any one of claims 3-4, wherein
the setting image is displayed in the middle of the plurality of setting images.

6. The information processing apparatus according to any one of claims 3-5, wherein
the plurality of setting images relate to a subset of the shooting modes.

7. The information processing apparatus according to any preceding claim, wherein
the at least one setting image in the second shooting mode is selected from the plurality of shooting parameter-setting images.

8. The information processing apparatus according to claim 7, wherein
when the second shooting mode is set to a program mode, the the at least one setting image is for setting one of: exposure, ISO, scene mode, drive mode, and picture effect.

9. The information processing apparatus according to any one of claims 7-8, wherein
when the second shooting mode is set to an aperture priority mode, the at least one setting image is for setting one of: creative style, beauty effect, manual focus, focus magnification, and a level.

10. The information processing apparatus according to any one of claims 10-9, wherein
when the another second mode is set to a shutter speed priority mode, the at least one setting image is for setting one of: a drive mode, auto focus, tracking focus, bracket shooting, and ISO.

11. A method comprising:
controlling a display device having a touch panel arranged on a surface to display a through-the-lens image output by an image sensor;
determining a selected shooting mode from a plurality of shooting modes based on a flick operation on the touch panel; and
controlling the display device to display at least one setting image according to the selected shooting mode, wherein
the at least one setting image is displayed on the through-the-lens image; and
the at least one setting image displayed in a first shooting mode is different from that in a second shooting mode.

12. A computer program comprising instructions which, when the program is executed by a computer, cause the computer to carry out the method of claim 11.
